(19) **Europäisches Patentamt / European Patent Office / Office européen des brevets**

(11) **EP 1 791 328 A1**

(12) **EUROPEAN PATENT APPLICATION**
published in accordance with Art. 158(3) EPC

(43) Date of publication:
**30.05.2007 Bulletin 2007/22**

(51) Int Cl.:
*H04M 1/02* (2006.01)      *F16C 11/04* (2006.01)

(21) Application number: **05774665.3**

(86) International application number:
**PCT/JP2005/015263**

(22) Date of filing: **23.08.2005**

(87) International publication number:
**WO 2006/030607 (23.03.2006 Gazette 2006/12)**

(84) Designated Contracting States:
**DE FR GB**

(30) Priority: **14.09.2004 JP 2004266845**
**09.05.2005 JP 2005135881**

(71) Applicant: **MITSUBISHI DENKI KABUSHIKI KAISHA**
**Chiyoda-ku, Tokyo 100-8310 (JP)**

(72) Inventors:
 • **INUBUSHI, Toshiya,**
 **c/o Mitsubishi Denki K.K.**
 **Tokyo 100-8310 (JP)**

 • **NISHIE, Tomoyuki,**
 **c/o Mitsubishi Denki K.K.**
 **Tokyo 100-8310 (JP)**
 • **YOKOI, Masahiro,**
 **c/o Mitsubishi Denki K.K.**
 **Tokyo 100-8310 (JP)**

(74) Representative: **Popp, Eugen et al**
**Meissner, Bolte & Partner GbR**
**Postfach 86 06 24**
**81633 München (DE)**

(54) **MOBILE DEVICE**

(57)    A mobile device, comprising a first casing (3) on which electronic devices are mounted, a second casing (1) on which electronic devices including a display part is mounted, and a hinge (11) rotatably connecting the first casing to the second casing in the stacked state of the front surface of the first casing with the rear surface of the second casing at positions deviated from the one end side lateral centers thereof. For the mobile device having the lower casing and the upper casing stacked with each other, a deformation to near its appearance to an aesthetic appearance symmetric and excellent in human engineering can be completed by one deformation operation.

**FIG. 7**

EP 1 791 328 A1

**Description**

Technical Field

The present invention relates to a mobile device such as a mobile phone or the like and, more specifically, to a mobile device including two casings that store electronic devices, the two casings being joined so as to be capable of opening and closing.

Background Art

A demand for user-friendliness of mobile devices such as a mobile phone is high, and hence it is important to improve the user-friendliness of the mobile device. On the other hand, since requirements for designing the shape of the mobile device to have characteristics superior in terms of human engineering are also high, it is important to improve the user-friendliness and the human engineering characteristics simultaneously.
In recent years, various types of mobile devices which are changed in shape according to usage of a user in order to improve the user-friendliness of various functions provided in the mobile device are proposed.
For example, as described in Patent Document 3, a foldable casing structure having two casings connecting with a hinge is now generally used. In a foldable mobile phone, a relatively large display device such as LCD may be mounted to one of the casings to display images or character data conspicuously.
On the other hand, the mobile phone is now added with various types of application functions, and is provided with not only a talking function, but also a mailing function, a camera function, a television broadcasting receiver function. Therefore, various types of images are displayed on the display device of the mobile phone corresponding to the various functions. However, in general, the display device has a screen vertically elongated due to the restriction by the casing structure. Therefore, in a case of displaying a laterally elongated screen such as a TV image or in a case of displaying a long sentence such as a mail, the screen display is not eye friendly for the user.
Therefore, a mobile phone in which the screen of the display device may be arranged in a vertically elongated orientation and a laterally elongated orientation by rotating the casing having the display device mounted thereof with respect to the other casing is proposed in Patent Document 1 listed below.
The mobile phone includes a lower casing and an upper casing laid one on top of the other and engaged with each other with an engaging unit which enables the upper casing and the lower casing to slide and rotate freely in a state that the front surface of the lower casing and the back surface of the upper casing are laid one on top of the other. The engaging unit includes a projection and a groove corresponding to the projection. The projection is provided at a center in the widthwise direction and one end side in the longitudinal direction of the lower casing so as to project along a direction of overlap of the lower casing and the upper casing. Through the movement of the projection in the groove, the sliding movement is enabled, and through the rotation of the projection in the groove, the rotation is enabled.
The mobile phone in this configuration can be converted from a mode in which the lower casing and the upper casing overlap completely with each other (hereinafter referred to as "storage mode") to a mode in which the longitudinal direction of the lower casing and the longitudinal direction of the display unit intersect at substantially 90° (hereinafter referred to as "image viewing mode") by rotating the upper casing with respect to the lower casing about the projection which as an axis of rotation.
In the image viewing mode, the mobile phone is transformed to assume substantially T-shape by the lower casing and the display unit by sliding the upper casing with respect to the lower casing.
There is a mobile phone described in Patent Document 2.
This mobile phone is so-called "foldable mobile phone", and an end portion of a lower casing and an end portion of an upper casing having a display are engaged by a hinge that makes the lower casing and the upper casing capable of opening and closing freely. The hinge has an axis of rotation provided along the widthwise direction of the lower casing and the upper casing.
The lower casing and the upper casing are formed substantially into a rectangular parallelepiped and the hinge engages sides of the respective casings the widthwise direction, and are configured in such a manner that a talking unit provided in the lower casing and a receiving unit provided in the upper casing are away from each other when the lower casing and the upper casing are opened.
The foldable mobile phone has a configuration in which the upper casing is divided into a support unit and a display unit having a display. Furthermore, the foldable mobile phone is configured in such a manner that a projection provided on the display unit passes through an elongated hole provided on the support unit, and the inner diameter of the elongated hole is formed so as to be larger than the outer diameter of the projection, so that the support unit and the display unit are slidable and rotatable.
The foldable mobile phone is transformed from a mode in which the lower casing and the upper casing overlap to each other with the respective ends aligned to each other (corresponding to the above-described storage mode) to a mode in which the talking unit and the receiving unit are away from each other (hereinafter, referred to as "talking mode") by opening the lower casing and the upper casing via the hinge. Through the rotation of the display unit with respect to the support unit from this mode, transformation into a mode in which the longitudinal direction of the display unit intersects with the longitudinal direction of the lower casing by about 90° (corresponding to the image viewing mode) is achieved.

The mobile phone is transformed into a mode in which the lower casing and the display unit assume a substantially T-shape by sliding the display unit with respect to the support unit in the image viewing mode.

There is a mobile phone disclosed in Non-patent Document 1 listed below.

This mobile phone is configured in such a manner that one end portion of a lower casing and one end portion of an upper casing are engaged so that the upper casing is rotatable by 180° with respect to the lower casing about an axis which passes through the lower casing and the upper casing. Therefore, transformation from a mode in which the lower casing and the upper casing are laid one on top of the other with the other ends of the lower casing and the upper casing relatively aligned with each other (corresponding to the storage mode) into a mode in which the lower casing and the upper casing are laid one on top of the other (corresponding to the talking mode) as well as a mode in which the longitudinal direction of the upper casing is oriented about 90° with respect to the longitudinal direction of the lower casing (corresponding to the image viewing mode) is achieved.

Furthermore, a foldable mobile phone including a lower unit having an operating panel, an upper unit having a display, and a hinge unit for coupling the both units about an axis which extends in parallel with the display so as to be capable of opening and closing freely is disclosed in Patent Document 4 listed below, in which the mobile phone configured in such a manner that the upper unit is divided into two parts in the direction of the thickness, that is, a support unit and a display unit, and the display unit is rotatable with respect to the support unit about an axis extending vertically with the display is proposed.

Patent Document 1: JP-A-2003-338866

Patent Document 2: JP-A-2003-319043

Patent Document 3: Japanese Patent No. 3109089

Patent Document 4: JP-A-2001-156893

Non Patent Document 1: 1. Website Copyright Owner: NTTDOCOMO 2. Website Name DOCOMONET 3. Related site in the Website "Products", "SO506iC" 4. Type of Medium {ONLINE} 5. Date of Search March 2nd, 2005 6. URL http://www.nttdocomo.co.jp/p_s/service/felica/f/so506ic.ht ml

Disclosure of the Invention

Problems to be Solved by the Invention

However, the mobile phone described in Patent Document 1, the mobile device cannot be transformed from the state in which the lower casing is covered by the upper casing to the state in which the lower casing and the upper casing assume a T-shape unless a transforming action 1 to configure the upper casing and the lower casing to intersect by substantially 90° by rotating the upper casing with respect to the lower casing and a transforming action 2 to slide the upper casing and the lower casing which intersect by substantially 90° with respect to each other are performed.

The mobile device transformed by the transforming action 1 has no symmetry property, which cannot achieve comfort in terms of human engineering.

As regards the mobile device according to Patent Document L, when arranging the screen of the display device in a Laterally elongated orientation, it is necessary to rotate about a pin by 90°, and then slide the pin along a cam, which is poor in operability and requires a sliding mechanism.

Furthermore, the mobile device according to Patent Document 1, telephone calls are to be performed in a state in which the display unit is laterally deployed, and hence the distance between a receiving port and a talking port should be secured adequately in this state. Therefore, there is a problem such that portability is impaired since the whole length of a main body is increased even in a state in which the display unit is stored in comparison with the foldable mobile phone.

There are also problems that operability such as the handhold property of the main body or the comfort when the receiving unit is placed on the ear is poor when talking in a state in which the display unit is deployed in the lateral orientation, or that operability is poor because the display may rotate in the course of the operation to deploy the display laterally or to store the same due to the structure which is rotatable about the pin.

Furthermore, when the display unit and the main body make relative movement such as rotation or sliding, it is required to secure the reliability of the electrical connection between the upper and lower units. However, this point is not disclosed.

The mobile phone described in Patent Document 2, two or more times of transforming actions are required when transforming the mobile phone from the state in which the lower casing is covered by the upper casing to the state in which the lower casing and the upper casing assume a T-shape.

The mobile phone disclosed in Non-Patent Document 1 has no symmetry property in shape when it is configured in the state in which the longitudinal direction of the upper casing intersects with the longitudinal direction of the lower casing by about 90°, and hence it has a shape which cannot achieve comfort in terms of human engineering.

The mobile phone according to Patent Document 4 in the related art has problems as follows. The upper unit should be configured with separate casings, that is, the support unit and the display unit, and hence the thickness is increased because they are laid one on top of the other in the direction of thickness. In addition, since the display unit cannot be viewed when the mobile phone is in the folded state, there is a strong need of a sub-display unit, and with the provision of the sub-display unit, the thickness of the product further increases.

When visibility is improved and the image quality is improved due to the realization of the lateral big screen, improvement of acoustic quality is required. However, the mobile phones in the related art are not improved in this point, and hence the improvement of acoustic quality remains as a subject.

In view of the problems in the mobile devices in the related art as described above, it is an object of the present invention to provide a mobile device having a lower casing and an upper casing laid on one top of the other with ends thereof relatively aligned with respect to each other in which transformation to a shape having a symmetry property and a good appearance superior in terms of human engineering is completed by one transforming action.

It is another obj ect to provide the mobile device in which a good operability is achieved and a screen of a display device may be arranged in the vertically elongated orientation or in the laterally elongated orientation without necessity of a sliding mechanism.

It is still another object to provide the mobile device such as a mobile phone in which the orientation of the display unit may be converted into the vertically elongated orientation or the laterally elongated orientation, and the thickness and the size are reduced.

Means for Solving the Problems

A mobile device according to the present invention includes a first casing having an electronic device mounted therein, a second casing having an electronic device including a display mounted therein, and a hinge for rotatably connecting the first casing and the second casing on one end side thereof at a position deviated from the widthwise center in a state in which a front surface of the first casing and a back surface of the second casing are laid one on top of the other.

A mobile device according to the present invention includes a first hinge for rotatably connecting a first casing and a second casing on one end side thereof at the substantially widthwise center in a state in which a front surface of the first casing and a back surface of the second casing are laid one on top of the other, and a second hinge for rotatably connecting the first casing and the second casing on one end side thereof at a position deviated from the widthwise center in the state in which the front surface of the first casing and the back surface of the second casing are laid one on top of the other, wherein the first and second casings are rotatable about the first or second hinge in a state of being laid one on top of the other, wherein when the second casing is rotated from a closed state in a first direction, the second casing is rotated substantially by 180° about the first hinge so that the first and second casings are opened straight, and when the second casing is rotated from the closed state in a second direction opposite from the first direction, the second casing is rotated substantially by 90° about the second hinge so that the first and second casings are opened into a T-shape.

A mobile device according to the present invention includes an upper casing having a display on a front surface thereof and being formed to have the longitudinal direction along the longitudinal direction of the display, a lower casing being formed to have the longitudinal direction along the longitudinal direction of the upper casing and being laid on the upper casing so that a front surface thereof and a back surface of the upper casing are laid one on top of the other, and a rotatably engaging unit that engages the upper casing with respect to the lower casing so as to be capable of rotating about an axial line which penetrates through the upper casing and the lower casing, wherein the axial line is arranged at a position deviated from the widthwise center of the lower casing.

Furthermore, a mobile phone according to the present invention including a first casing having an operating panel and a second casing having a display and being arranged so as to be laid on top of the first casing, the first casing and the second casing being opened straight when the second casing is rotated by 180°, and being opened into a T-shape when the second casing is rotated by 90°, includes a slide rail fixed to a surface opposing a surface of the second casing having the display, a slide plate being engaged with the slide rail so as to be capable of moving in the horizontal direction but not to be capable of rotating and having a hinge-engagement hole for being engaged with a hinge device, the hinge device being provided on the same surface where the operating panel of the first casing is installed, wherein the hinge device includes a hinge body fixed to the first casing so as not to be capable of rotating, a hinge shaft supported so as not to be capable of rotating with respect to the slide plate and so as to be capable of rotating with respect to the hinge body, a mounting boss forming a part of the hinge shaft and projecting from the hinge body, a sliding member provided so as to be slidable in the axial direction within the hinge body, and a resilient member A provided on the hinge body for urging the sliding member in the axial direction to bring the same into abutment with the hinge shaft, and the mounting boss and the hinge-engagement hole are engaged so as not to rotate with respect to each other.

Advantages of the Invention

According to the mobile device in the present invention, since the rotatably engaging unit for allowing the upper casing to rotate with respect to the lower casing from the state in which the lower casing and the upper casing are laid one on top of the other is provided, transformation to the mode in which the upper casing intersects with the lower casing substantially by 90° is achieved with one action.

In addition, the shape transformed with one action is close to the symmetrical shape which provided comfort in terms of human engineering. Therefore, the mobile device having both the characteristics superior in terms of human engineering and a user-friendliness which can achieve the transformation with one action is provided.

According to the mobile device in the present invention, the first and second casings are opened straight when being rotated about the first hinge by 180°, and the first and second casings are opened into a T-shape when being rotated about the second hinge by 90°. Therefore, a sliding mechanism is not necessary, and the relative arrangement between the first and second casings can be changed between the straight shape and a T-shape with a simple operation of the hinge.

According to the mobile device in the present invention, since the second casing and the first casing are opened straight when the second casing is rotated by 180° about the hinge and the first and second casings are opened into a T-shape when the second casing is rotated by 90°. Therefore, the display may be arranged in the vertically elongated orientation or the laterally elongated orientation, and the mobile phone having the thickness and the size reduced is obtained.

According to the mobile device in the present invention, since a receiver and a speaker are provided on both sides with the intermediary of the display, a solid sound corresponding to the big screen is provided.

Best Mode for Carrying Out the Invention

First Embodiment

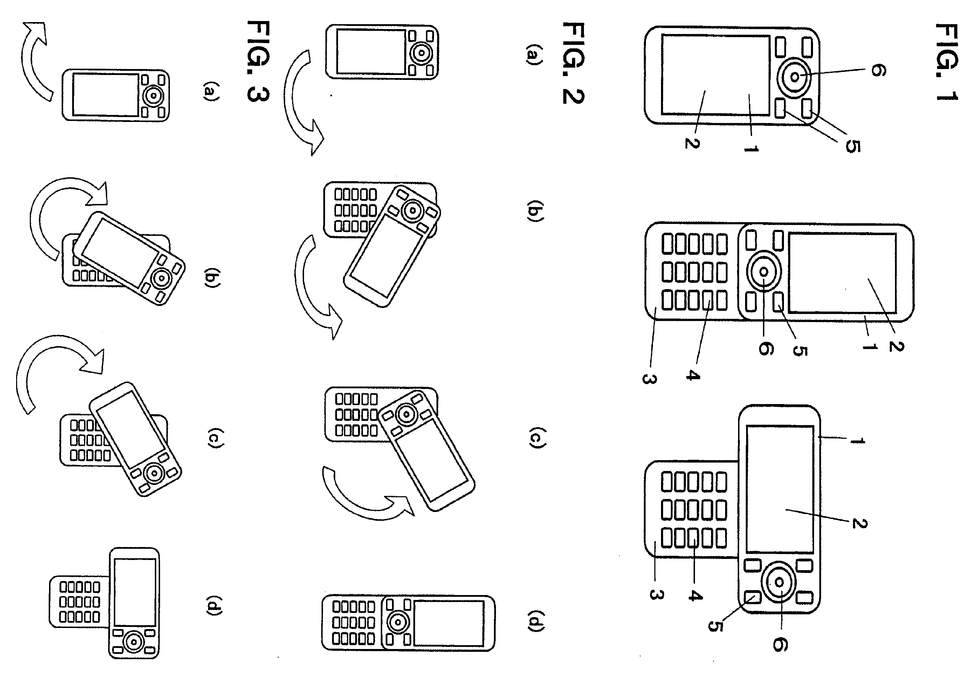

Fig. 1 is a plan view showing an embodiment to which the present invention is applied to a mobile phone, in which Fig. 1(a) shows a state in which two casings are closed, Fig. 1(b) shows a state in which the two casings are opened straight by being rotated by 180° about a first hinge, and Fig. 1(c) shows a state in which the two casings are opened into a T-shape by being rotated by 90° about a second hinge. In the drawings, reference numeral 1 designates a display-side casing on which a display device 2 formed of LCD is provided on the front surface, and reference numeral 3 designates an operating-side casing on which operating buttons 4 such as ten keys are arranged on the front surface. The display-side casing 1 is provided with four function keys 5 and a cross-shaped key 6 so as to be capable of operating the mobile phone in the closed state as well.

The mobile phone according to this embodiment is provided for a user to be used in a compact mode closed as in Fig. 1(a) when being carried in a pocket or a bag, a mode in which the display-side casing 1 and the operating-side casing 3 arranged straight as in Fig. 1(b) when being used for telephone calls or providing a vertically elongated screen display on the display device 2, and a mode in which the display-side casing 1 and the operating-side casing 3 are arranged into a T-shape as in Fig. 1(c) when displaying the content of e-mails or TV-screen in the laterally elongated orientation on the display device 2.

Before describing the detailed configuration, operation to arrange the display-side casing 1 and the operating-side casing 3 straight or into a T-shape will be described briefly. Fig. 2 is a drawing schematically showing operation to arrange the display-side casing 1 and the operating-side casing 3 straight, in which Fig. 2(a) shows a state in which the back surface of the display-side casing 1 and the front surface of the operating-side casing 3 are laid on top of the other in a closed state. When the display-side casing 1 is rotated by 180° counterclockwise from this state on a paper plane to open as indicated by arrows, the display-side casing 1 and the operating-side casing 3 are arranged straight as shown in Figs. (b), (c), (d). That is, in this case, a hinge shaft which allows the rotation of the display-side casing 1 and the operating-side casing 3 is arranged at end portions of the casings at the substantially widthwise centers thereof.

On the other hand, Fig. 3 is a drawing schematically showing operation when the display-side casing 1 and the operating-side casing 3 are arranged into a T-shape, in which Fig. 3 (a) shows a state of being closed. When the display-side casing 1 is rotated by 90° clockwise on the paper plane to open, the display-side casing 1 and the operating-side casing 3 are arranged into a T-shape as shown in Figs. (b), (c), (d). That is, in this case, a hinge shaft for allowing the display-side casing 1 and the operating-side casing 3 to rotate is arranged on the one end portions of the respective casings at a position deviated from the widthwise centers thereof.

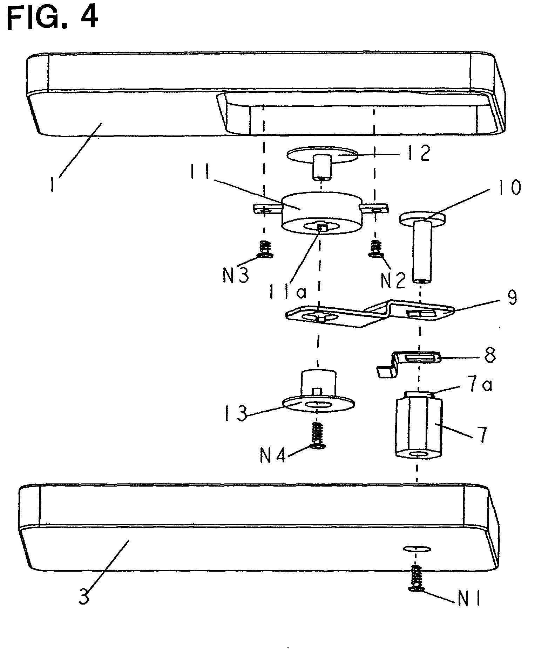

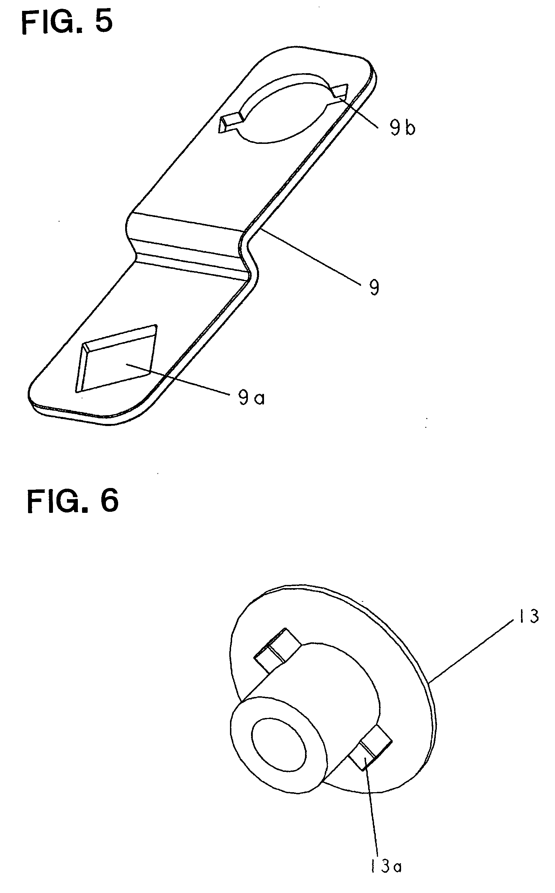

Referring now to Fig. 4, a configuration of a hinge mechanism that connects the display-side casing 1 and the operating-side casing 3 which are operated to open and close in the manner described above will be described. Fig. 4 is a developed assembly drawing showing a configuration of the hinge mechanism, in which reference numeral 7 designates a first hinge mounted to the operating-side casing 3, which is provided with a square hinge shaft 7a. The hinge shaft 7a is fitted to square holes formed on a stopper 8 and a connecting strip 9, and a screw N1 is screwed into a screw hole provided in a shaft 10 from the back surface of the operating-side casing 3 for assembly. Fig. 5 is a part drawing showing the connecting strip 9 in detail, in which reference numeral 9a designates the square hole which is fitted on the hinge shaft 7a.

Reference numeral 11 designates a second hinge mounted to the display-side casing 1, which is screwed to a screw boss formed on the display-side casing 1 with screws N2 and N3. The hinge shaft on the radially inside of the hinge 11 is formed with a key groove 11a. Reference numeral 12 designates a shaft and is interposed between the hinge 11 and the display-side casing 1 when mounting the hinge 11. Reference numeral 13 designates a shaft and is formed with a projection 13a which is fitted to a key groove 9b of the connecting strip 9 and the key groove 11a of the hinge 11 as shown in Fig. 6. The shaft 13 is assembled by screwing a screw N4 into a screw hole of the shaft 12.

In this manner, the first hinge 7 is mounted substantially to the widthwise center of an end portion of the operating-side casing 3, and the second hinge is mounted to an end portion of the display-side casing 1 at a position deviated from the widthwise center thereof. The hinges 7 and 11 are connected by the connecting strip 9, and the display-side casing 1 and the operating-side casing 3 are held in the state laid one on top of the other with the connecting strip 9.

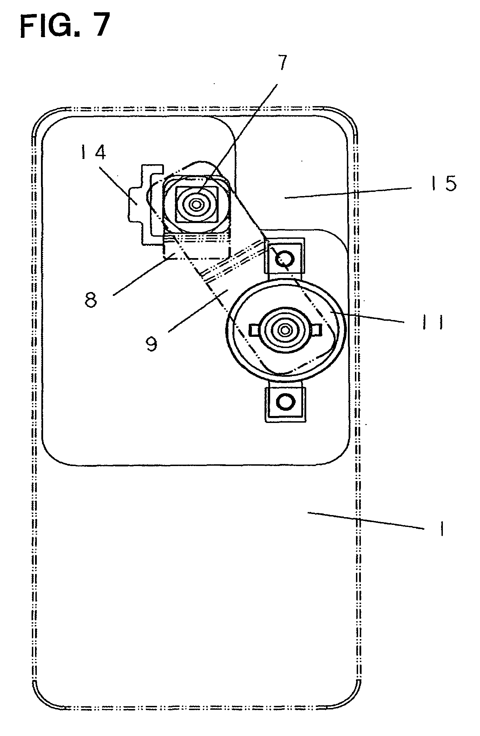

Subsequently, opening and closing operation by the first and second hinges 7, 11 will be described. Fig. 7 shows the hinge mechanism seen through the operating-side casing 3 from the side of the operating-side casing 3 in the state in which the display-side casing 1 and the operating-side casing 3 are closed. However, for the sake of convenience, a rib 14 as a stopper formed on the operating-side casing 3 is shown imaginarily.

In this state, the first hinge 7 is prevented from rotating clockwise since the stopper 8 is in abutment with the rib 14 formed on the operating-side casing 3. The second hinge 11 is prevented from rotating counterclockwise since a wall 15 formed on the display-side casing 1 is in abutment with the connecting strip 9. In other words, when the display-side casing 1 is rotated counterclockwise, it rotates about the first hinge. When it is rotated clockwise, rotation about the second hinge is achieved.

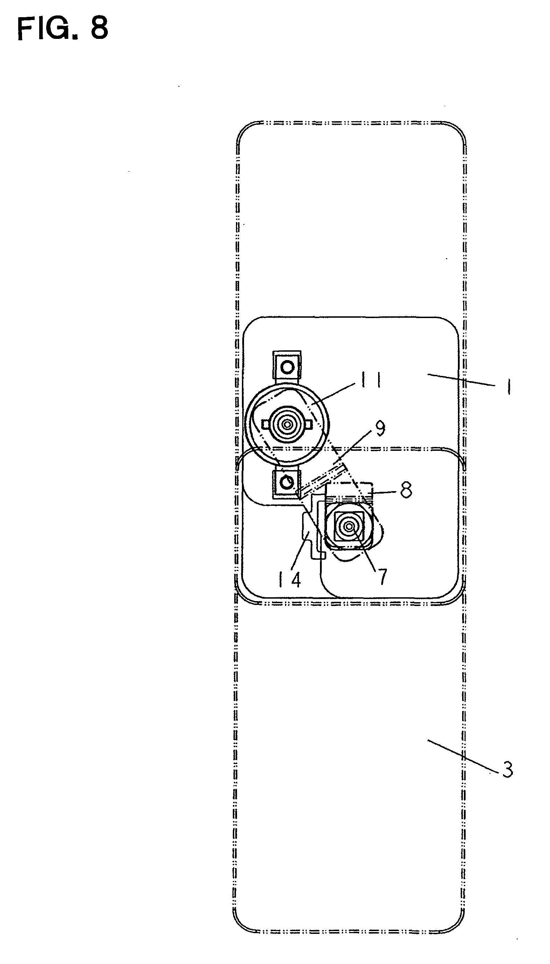

Firstly, when the display-side casing 1 is rotated counterclockwise, it rotates about the first hinge 7. When rotation reaches 180°, the stopper 8 comes into abutment with the rib 14 formed on the operating-side casing 3 as shown in Fig. 8, so that further rotation is prevented. In other words, when the display-side casing 1 is rotated counterclockwise, it is rotated by 180° and the display-side casing 1 and the operating-side casing 3 are opened in the state of being arranged straight. Therefore, as shown in Fig. 1(b), it assumes a length suitable for making telephone calls, and the display device 2 provides a vertically elongated screen display, so that the operating buttons 4 may be operated while viewing the vertically elongated image.

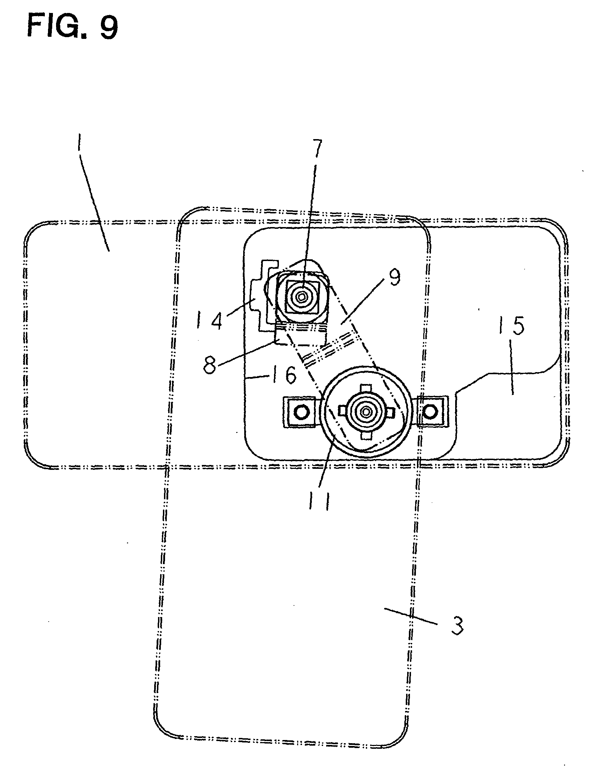

When the display-side casing 1 is rotated clockwise, it rotates about the second hinge 11. Then, when it rotates by 90°, as shown in Fig. 9, a wall 16 of the display-side casing 1 comes into abutment with the rib 14 formed on the operating-side casing 3, and further rotation is prevented. In other words, when the display-side casing 1 is rotated clockwise, it is rotated by 90°, so that the display-side casing 1 and the operating-side casing 3 are opened in the state of being arranged in a T-shape. Therefore, as shown in Fig. 1 (c), the display device 2 assumes a laterally elongated screen display, so that creation of an e-mail text or viewing of laterally elongated TV images may be achieved by operating the operating buttons 4 or the like.

The mobile phone includes various electronic parts mounted in the display-side casing 1 and the operating-side casing 3, and the respective electronic parts are electrically connected. Therefore, there is provided a cable or a flexible printed board for electrical connection between the display-side casing 1 and the operating-side casing 3.
In general, when the display-side casing 1 and the operating-side casing 3 are operated to open and close, a stress is applied to the cable or the flexible printed board in association with the operation, which may result in breakage.

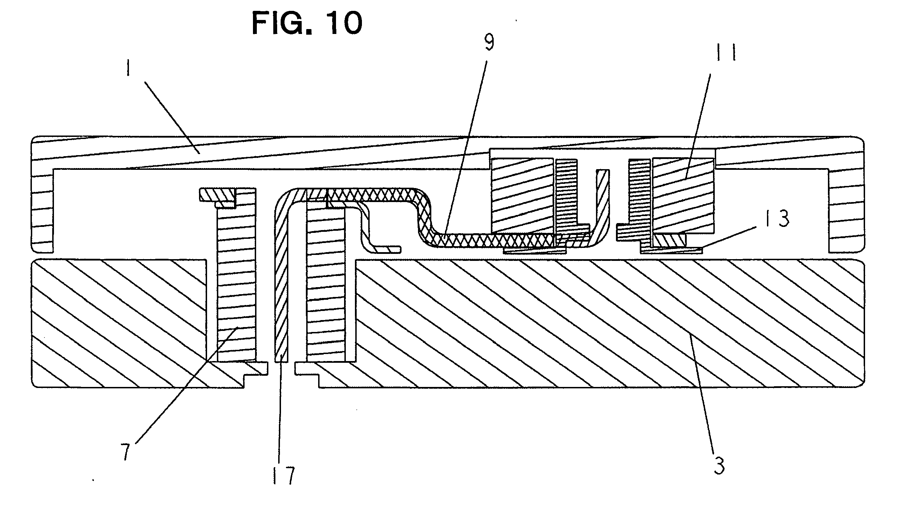

In the first embodiment of the present invention, as shown in Fig. 10, the stress applied to the cable or the flexible printed board may be reduced by usage of the connecting strip 9.
In other words, a cable 17 as a signal line is laid along the first hinge 7, the connecting strip 9 and the second hinge 11. The cable 17 is fixed integrally with the connecting strip 9, the stress is not generated even when the display-side casing 1 and the operating-side casing 3 are operated to open and close.
Although the cable is laid as the signal line in Fig. 10, other signal lines such as the flexible printed board are also the same.

Second Embodiment

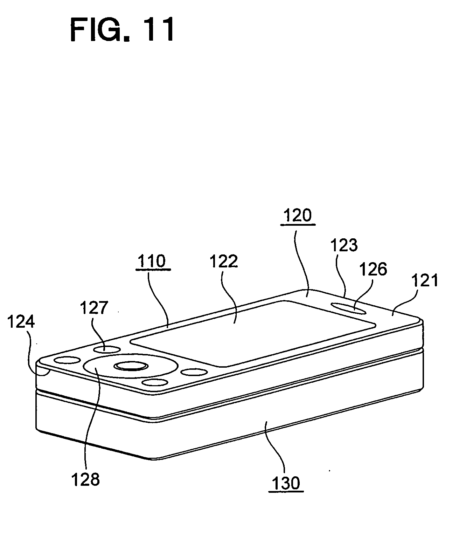

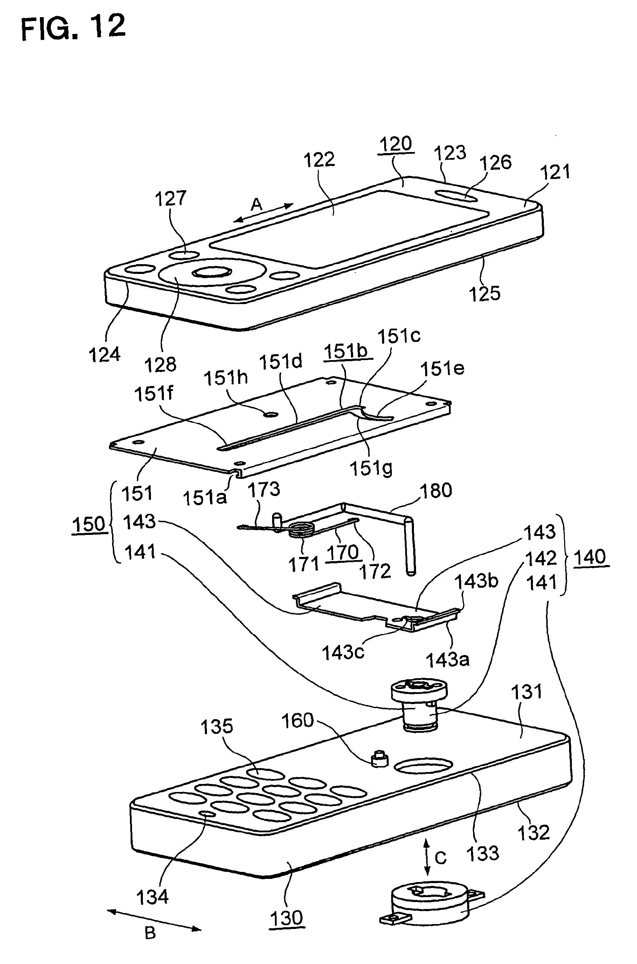

Fig. 11 is a perspective view showing a configuration of the mobile phone according to a second embodiment. Fig. 12 is an exploded perspective view showing a configuration of the mobile phone according to the second embodiment.
Referring now to Fig. 11 and Fig. 12, the configuration of the mobile phone according to the second embodiment will be described.
Amobile phone 110 includes a display-side casing (upper casing) 120, an operating-side casing (lower casing) 130, a rotatably engaging unit 140, a slidably engaging unit (transformation unit) 150, a projection 160, a slide assisting spring 170, and a coaxial cable 180.

The display-side casing 120 includes a display device 122 formed of LCD (Liquid Crystal Display), a speaker (receiving unit) 126 that mainly outputs received sound, function keys 127 being always exposed on a front surface 121 for allowing predetermined functions to be operated and a cross-shaped key 128 being always exposed on the front surface for controlling the image displayed on the display device 122 upward, downward, leftward and rightward.

The operating-side casing 130 includes a microphone (talking unit) 134 mainly for collecting sound to be transmitted and ten keys 135 used when inputting characters or numbers on a front surface 131.
The front surface 131 of the operating-side casing 130 and a back surface 125 of the display-side casing 120 are arranged so as to be laid one on top of the other. In the second embodiment, the display-side casing 120 and the operating-side casing 130 are formed substantially the same dimensions.

The rotatably engaging unit 140 includes a rotation-receiving member 141, a cam (rotation allowing member, slide restricting member) 142 and a slider plate (rotation restricting member, slide allowing member) 143.
The rotation-receiving member 141 is arranged so that an axial line C of the rotatably engaging unit 140 is positioned at a position deviated from the substantially center of the operating-side casing 130 in the widthwise direction B. The rotation-receiving member 141 is fixed to the operating-side casing 130 by screwing, so that it cannot be rotated or slid with respect to the operating-side casing 130.

The axial line C is provided on the operating-side casing 130 at a position deviated toward one end portion 133 in the widthwise direction. The axial line C is provided in the direction penetrating through the operating-side casing 130 and the display-side casing 120 from a back surface 132 of the operating-side casing 130 through the front surface 131 of the operating-side casing 130, the back surface 125 of the display-side casing 120, to the front surface 121 of the display-side casing 120.
The rotatably engaging unit 140 is configured so that one end portion 123 of the display-side casing 120 in the longitudinal direction, which is located at a position at a distance from the axial line C shorter than a distance from the other end portion 124 of the display-side casing 120 in the longitudinal direction, can be arranged to a state of being rotated substantially by 1/4 turn with respect to the operating-side casing 130 toward the one end portion 133 of the operating-side casing 130 in the widthwise direction.

The cam 142 is adapted to be accommodated in the rotation-receiving member 141, and is rotatable in the rotation-receiving member 141 about the axial line C. The cam 142 is formed with a cable hole 142a for allowing passage of the coaxial cable 180 at the center thereof.

The slider plate 143 is fixed to the cam 142 with a screw. The slider plate 143 is formed by bending a metal plate to form a wall portion 143a extending along the axial direction of the screw for securing the cam 142 with respect to the slider plate 143. The ends 143b of the slider plate 143 in the widthwise direction of the mobile phone 110 are arranged to align the thickness direction of the slider plate 143 and the thickness direction of the mobile phone 110. The slider plate 143 is not capable of rotating with respect to the display-side casing 120. The slider plate 143 is formed with a cable hole 143c for allowing passage of coaxial cable 180.

The slidably engaging unit 150 includes a slide-receiving member 151, the slider plate 143 and the cam 142. The slide-receiving member 151 is secured to the display-side casing 120 with a screw. One of the ends of the slide-receiving member 151 in the widthwise direction of the mobile phone is formed with an end portion accommodating groove 151a for accommodating the end 143b of the slider plate 143. The slide-receiving member 151 is formed with a groove 151b at a position which substantially corresponds to the widthwise center of the operating-side casing 130.

The groove 151b includes an initial stage projection accommodating groove 151c formed to allow passage of the projection 160, a slide allowing groove 151d extending along the longitudinal direction of the operating-side casing 130 and the display-side casing 120 substantially linearly from the initial stage projection accommodating groove 151c, and a rotation allowing groove 151e formed to extend from the initial stage projection accommodating groove 151c into an arcuate shape having a center point at the position of the axial line C.
A wall surface that forms the slide allowing groove 151d is referred to as a slide-rotation restricting wall portion (slide-rotation restricting member) 151f. A wall surface that forms the rotation allowing groove 151e is referred to as a rotation-slide restricting wall portion (rotation-slide restricting member) 151g.
The slide-receiving member 151 is formed with a cable hole 151h for allowing passage of the coaxial cable 180.

The projection 160 is integrally formed on the operating-side casing 130 so as to project from the front surface 131 of the operating-side casing 130. The position of formation of the projection 160 is a position where the projection 160 is accommodated in the initial stage projection accommodating groove 151c of the groove 151b when the operating-side casing 130 and the display-side casing 120 are laid one on top of the other.

The slide assisting spring 170 is a formed wire spring, and is provided with a wound portion 171, a linear portion 172 and a linear portion 173. The end of the one linear portion 172 is engaged with the projection (not shown) of the front surface 131 of a operating-side casing 130, and the end of the other linear portion 173 is engaged with a projection (not shown) provided on the slider plate 143. The formed wire spring is adapted to assume substantially angular C-shape in a state of natural length by the linear portion 172 and the linear portion 173 extending respectively from the wound portion 171.

The coaxial cable 180 is accommodated in the cable hole 151h formed on the slide-receiving member 151, the cable hole 143c formed on the slider plate 143, and the cable hole 142a formed on the cam 142, and electrically connects a printed wiring assembly (not shown) accommodated in the display-side casing 120 and a printed wiring assembly (not shown) accommodated in the operating-side casing 130.

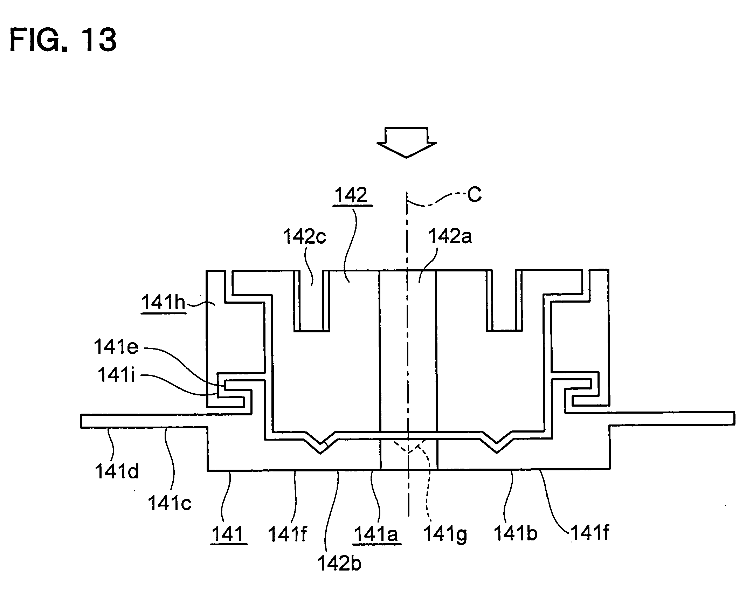

Fig. 13 is a cross-sectional view for explaining a configuration of the rotation-receiving member 141 and the cam 142.

The rotation-receiving member 141 includes a fixed portion 141a and a rotating portion 141h.

The fixed portion 141a includes a fixed plate portion 141b, a fixed arm portion 141c, a hole 141d, a fitting inner edge 141e, a cam-receiving recess 141f and an image viewing mode cam-receiving recess 141g, and is formed substantially into a cylindrical shape.

The fixed plate portion 141b is a portion on the bottom of the fixed portion 141a.

The fixed arm portions 141c extend so as to project from a circumference of the fixed portion 141a.

The fixed arm portions 141c each are formed with a hole 141d. Screws pass through the holes 141d, and the fixed portion 141a and the operating-side casing 130 are secured with the screws passed therethrough.

The fitting inner edge 141e is provided around an upper port of the fixed portion 141a so as to project outward.

The cam-receiving recess 141f is an inclined surface formed on the fixed plate portion 141b so as to be depressed, and the depressed portion has a shape like an umbrella. The rotation-receiving member 141 is formed with another cam-receiving recess 141f at a point symmetrical portion with respect to the cam-receiving recess 141f with reference to the position of the axial line C when viewing the cam 142 along the direction indicated by Arrow D from the upper side of the paper plane of Fig. 13.

The image viewing mode cam-receiving recess 141g is an inclined surface formed on the fixed plate portion 141b so as to be depressed, and the depressed portion has a shape like an umbrella. The rotation-receiving member 141 is formed with another image viewing mode cam-receiving recess (not shown) is formed at a point symmetrical position with respect to the image viewing mode cam-receiving recess 141g with reference to the position of the axial line C when viewing the cam 142 along the direction indicated by Arrow D from the upper side of the paper plane of Fig. 13.

A segment connecting one of the cam-receiving recesses 141f and the axial line C and a segment connecting the image viewing mode cam-receiving recess 141g and the axial line C are arranged so as to form an angle of 90° with respect to each other.

The rotating portion 141h has a fitting outer edge 141i. The rotating portion 141h is a member formed substantially into a cylindrical shape.

The fitting outer edge 141i is provided on the periphery of the lower port of the rotating portion 141h so as to project inwardly. The fitting outer edge 141i fits the fitting inner edge 141e with respect to each other, and rotatably engages the fixed portion 141a and the rotating portion 141h with respect to each other.

The cam 142 includes the cable hole 142a, a cam projection 142b and screw grooves 142c. The cam 142 is formed substantially into a cylindrical shape, and the cam 142 is accommodated in a hole formed inside the rotation-receiving member 141.

The cable hole 142a is a void portion formed inside the cam 142, and is formed so as to be capable of accommodating the coaxial cable 180.

The cam projection 142b is formed into an umbrella shape which can be accommodated in the cam-receiving recess 141f.

The screw grooves 142c are formed on the upper side of the thick part of the cam 142.

The cam 142 is constantly urged in the direction D toward the fixed plate portion 141b by a rotation assisting spring, which is not shown.

The slider plate 143 includes the wall portions 143a and the ends 143b. The slider plate 143 is fixed to the cam 142 with screws accommodated in the screw grooves 142c of the cam 142.

The wall portions 143a are portions formed by bending the ends of the slider plate 143 with respect to the width of the mobile phone 110. The wall portions 143a extend along the thickness of the mobile phone 110.

The ends 143b are formed by bending ends of the wall portions 143a and extend therefrom along the widthwise direction of the mobile phone.

The slidably engaging unit 150 includes the slide-receiving member 151, the slider plate 143 and the cam 142.

The slide receiving member 151 is a metal plate secured to the display-side casing 120, and includes the end portion accommodating groove 151a, the groove 151b, and the cable hole 151h.

The end portion accommodating groove 151a is a groove formed in the direction of thickness of the mobile phone 110 by bending the end of the slide-receiving member 151. The end portion accommodating groove 151a slidably accommodates the ends 143b of the slider plate 143.

The groove 151b is formed substantially at the center and the portion around the center of the slide-receiving member 151 in the widthwise direction of the mobile phone 110, and includes the initial stage projection accommodating groove 151c, the slide allowing groove 151d, the rotation allowing groove 151e, the slide-rotation restricting wall portion 151f and the rotation-slide restricting wall portion 151g.

The initial stage projection accommodating groove 151c is formed at a position away from the axial line C.

The slide allowing groove 151d is arranged from the initial stage projection accommodating groove 151c as a starting point along the longitudinal direction of the mobile phone 110.

The rotation allowing groove 151e assumes an arc starting from the initial stage projection accommodating groove 151c so as to have a radius corresponding to the length from the axial line C to the initial stage projection accommodating groove 151c about the axial line C.

The slide-rotation restricting member 151f is a wall forming the slide allowing groove 151d.

The rotation-slide restricting wall portion 151g is a wall forming the rotation allowing groove 151e.

The cable hole 151h is formed so that the coaxial cable 180 penetrates through the slide-receiving member 151.

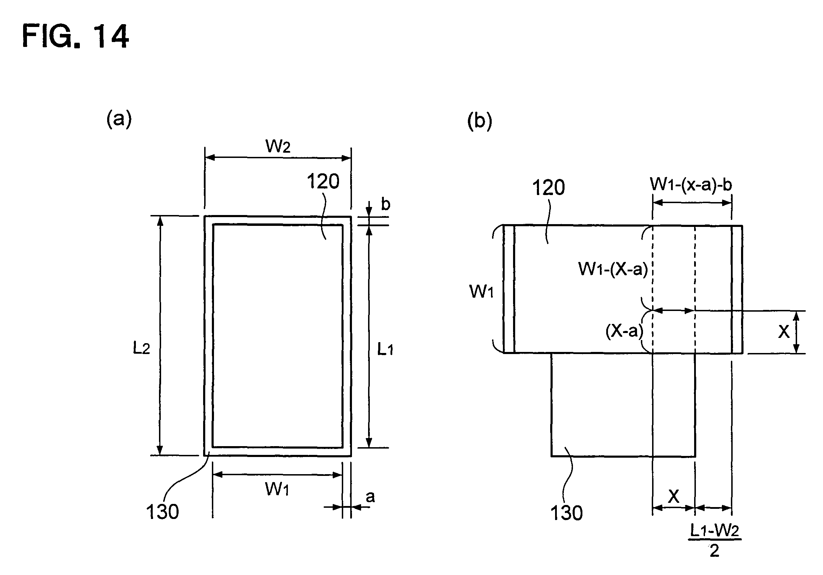

Fig. 14 is a pattern diagram showing a configuration of the operating-side casing 130 and the display-side casing 120.

Fig. 14 (a) is a pattern diagram showing the shape of the mobile phone1 110 in a case in which the operating-side casing 130 and the display-side casing 120 are laid one on top of the other.

Fig. 14 (b) is a pattern diagram showing the shape of the mobile phone 110 in a case in which the display-side casing 120 and the operating-side casing 130 are rotated with respect to each other in the state in which the front surface 131 of the operating-side casing 130 and the back surface 125 of the display-side casing 120 are laid one on top of the other.

Referring now to Fig. 14 (a) and Fig. 14 (b), the position of arrangement of the rotatably engaging unit 140 will be described.

In the mobile phone 110, the display-side casing 120 has a width of W1 and a longitudinal dimension of L1. The operating-side casing 130 has a width of W2 and a longitudinal dimension of L2.

In Fig. 14, the amount of rightward deviation of the right end of the operating-side casing 130 with respect to the right end of the display-side casing 120 is represented by "a", and the amount of upward deviation of the upper end of the operating-side casing 130 with respect to the upper end of the display-side casing 120 is represented by "b".

In this case, when a distance X from the widthwise end of the operating-side casing 130 to the axial line C satisfies:

$$X=(2W1+W1-L1+2a-2b)/4$$

and the display-side casing 120 is rotated with respect to the operating-side casing 130 in the state in which the front surface of the operating-side casing 130 and the back surface of the display-side casing 120 are laid one on top of the other, the longitudinal length of a right side portion of the display-side casing 120, which corresponds to a portion not overlaid on top of the operating-side casing 130, is the same as the longitudinal length of a left side portion of the display-side casing 120, which corresponds to a portion not overlaid on top of the operating-side casing 130.

Even though there are generally existing assembly errors, a symmetrical shape which gives a user a sufficient comfort and handheld stability is achieved, and the distance X may be deviated within the assembly error between the display-side casing 120 and the operating-side casing 130.

When the amount of deviation "a" is amin< a <amax with the assembly error, and the amount of deviation "b" is bmin< b <bmax with the assembly error, the distance X is;

$$(2W1+W1-L1+2amin-2bmax)/4 < X$$

$$< (2W1+W1-L1+2amax-2bmin)$$

When X satisfied the above described conditions, sufficient comfort and handheld stability are achieved. Here, the range of X has been described assuming that the right end of the operating-side casing (lower casing) 130 is deviated rightward with respect to the right end of the display-side casing (upper casing) 120, and when the upper end of the operating-side casing (lower casing) 130 is deviated upward with respect to the upper end of the display-side casing (upper casing) 120. However, when it is assumed that the right end of the operating-side casing (lower casing) 130 is deviated leftward with respect to the right end of the display-side casing (upper casing) 120 or when the upper end of the operating-side casing (lower casing) 130 is deviated downward with respect to the upper end of the display-side casing (upper casing) 120, the range of X is different from the range shown above. However, even when the value of X is varied on the premise of the assembly error, sufficient comfort and handheld stability are also achieved.

In other words, assuming that
the assembly errors of the amount of deviation "a" and the amount of deviation "b" are;

$$amin< a <amax$$

$$bmin< b <bmax$$

when the positive value of the amount of deviation "a" is the amount of rightward deviation of the right end of the upper casing with respect to the right end of the lower casing, and the positive value of the amount of deviation "b" is the amount of upward deviation of the upper end of the upper casing with respect to the upper end of the lower casing, the distance X from the longitudinal side of the lower casing to substantially the center of the rotatably engaging unit is;

$$(2W1+W1-L1-2amax+2bmin)/4 < X$$

$$< (2W1+W1-L1-2amin+2bmax)/4$$

In contrast, assuming that
the assembly errors of the amount of deviation "a" and the amount of deviation "b" are;

$$amin< a <amax$$

$$bmin< b <bmax$$

when the positive value of the amount of deviation "a" is the amount of leftward deviation of the right end of the upper casing with respect to the right end of the lower casing, and the positive value of the amount of deviation "b" is the amount of upward deviation of the upper end of the upper casing with respect to the upper end of the lower casing, the distance X from the longitudinal side of the lower casing to substantially the center of the rotatably engaging unit is;

$$(2W1+W1-L1+2amin+2bmin)/4 < X$$

$$< (2W1+W1-L1+2amax+2bmax)/4$$

Alternatively, assuming that
the assembly errors of the amount of deviation "a" and the amount of deviation "b" are;

$$amin< a <amax$$

$$bmin< b <bmax$$

when the positive value of the amount of deviation "a" is the amount of rightward deviation of the right end of the upper casing with respect to the right end of the lower casing, and the positive value of the amount of deviation "b" is the downward amount of deviation of the upper end of the upper casing with respect to the upper end of the lower casing, the distance X from the longitudinal side of the lower casing to substantially the center of the rotatably engaging unit is;

$$(2W1+W1-L1-2amax-2bmax)/4 < X$$

$$< (2W1+W1-L1-2amin-2bmin)/4$$

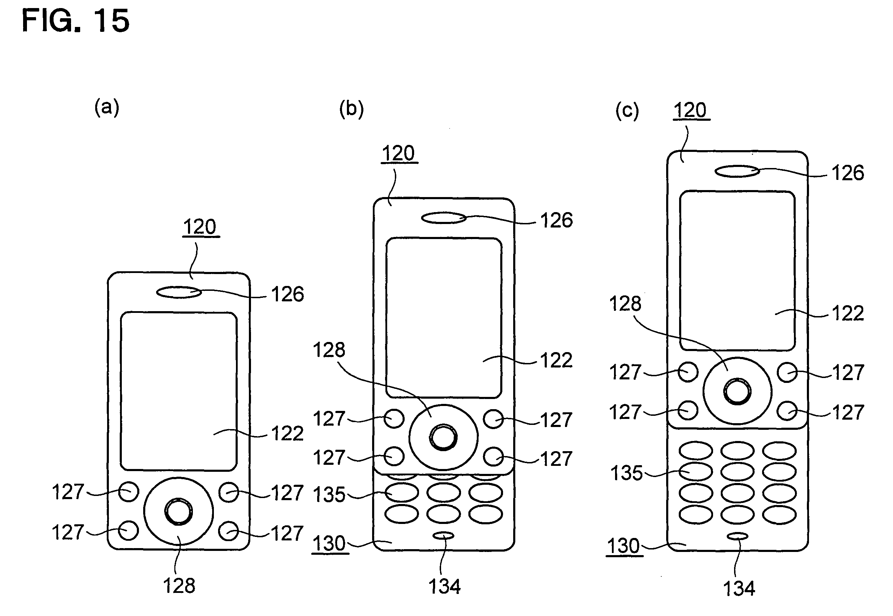

Fig. 15 is an explanatory drawing showing an action when the mobile phone 110 is transformed so that the operating-side casing 130 and the display-side casing 120 are slid with respect to each other.
Fig. 15 (a) is a pattern diagram of the mobile phone 110 showing a mode of the mobile phone 110 when the mobile phone 110 is stored in a bag or the like (hereinafter referred to as "storage mode").
Fig. 15 (b) is a pattern diagram of the mobile phone 110 showing a shape in the course of transformation from the mode of the mobile phone 110 when the mobile phone 110 is used for making telephone calls or preparing e-mail text (hereinafter, referred to as "talking mode").
Fig. 15(c) is a pattern diagram of the mobile phone, showing the talking mode. Referring now to Fig. 15 (a) to Fig. 15 (c), the action to slide the operating-side casing 130 and the display-side casing 120 of the mobile phone 110 from each other will be described.
In the storage mode, the operating-side casing 130 and the display-side casing 120 are laid completely one on top of the other. When the operating-side casing 130 and the display-side casing 120 are slid with respect to each other, the microphone 134 provided in the operating-side casing 130 and the speaker 126 provided in the display-side casing 120 move away from each other, so that the distance between the microphone 134 and the speaker 126 in the talking mode is longer than the distance between the microphone 134 and the speaker 126 in the storage mode. Therefore, the microphone 134 and the speaker 126 are positioned near the mouth and the ear of the head of the user respectively, so that talking performance is improved.
In the talking mode, the ten keys 135 are completely exposed, and hence the mail input operation is also possible.

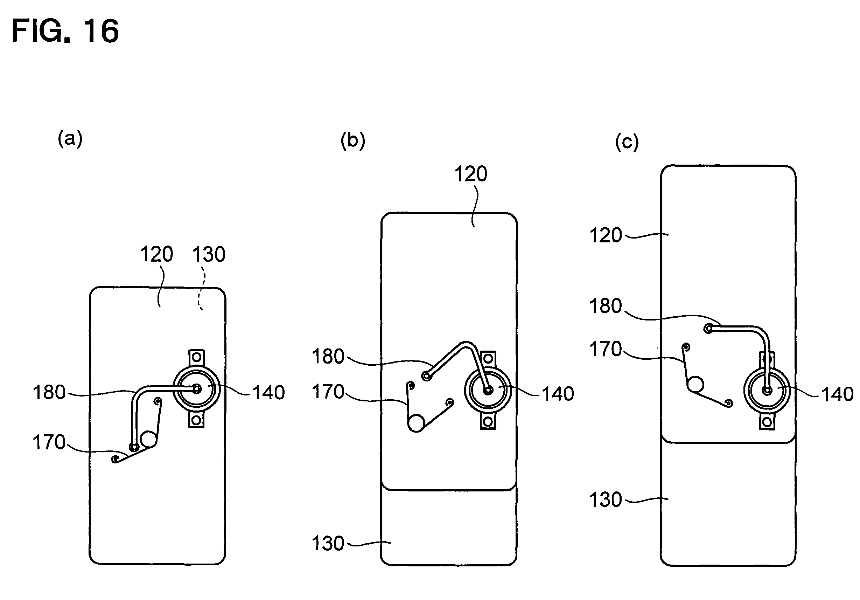

Fig. 16(a) is a pattern diagram of the mobile phone 110 showing a positional relationship among the rotatably engaging unit 140, the slide assisting spring 170 and the coaxial cable 180 of the mobile phone 110 in the storage mode.
Fig. 16(b) is a pattern diagram showing the positional relationship among the rotatably engaging unit 140, the slide assisting spring 170 and the coaxial cable 180 of the mobile phone 110 in the course of transformation to the talking mode.
Fig. 16 (c) is a pattern diagram of the mobile phone 110 showing the positional relationship among the rotatably engaging unit 140, the slide assisting spring 170 and the coaxial cable 180 of the mobile phone 110 in the talking mode.
The rotatably engaging unit 140, the slide assisting spring 170 and the coaxial cable 180 are not visible when viewing the display-side casing 120 from the outside as shown in Fig. 15. However, in Fig. 16, the rotatably engaging unit L40, the slide assisting spring 170 and the coaxial cable 180 are shown as being visible for convenience.
Referring to Fig. 16 (a) to Fig. 16 (c) , a state in which the positional relationship among the rotatably engaging unit 140, the slide assisting spring 170 and the coaxial cable 180 of the mobile phone 110 is changed with the sliding action will be described.
In the storage mode, the operating-side casing 130 and the display-side casing 120 are completely laid one on top of the other. In this state, the slide assisting spring 170 does not generate a restoring force.
In the course of transformation from the storage mode to the talking mode, the distance between one end and the other end of the slide assisting spring 170 of the mobile phone 110 decreases. Consequently, the length of the wound portion 171 of the slide assisting spring 170 increases, and the slide assisting spring generates the restoring force.
In a state close to the storage mode in the course of transformation from the storage mode to the talking mode, a sliding action in the direction in which the operating-side casing 130 and the display-side casing 120 are laid one on top of the other is assisted by the restoring force acting to increase the distance between the one end and the other end of the slide assisting spring 170. In a state close to the talking mode in the course of transformation from the storage mode to the talking mode, a sliding action in the direction in which the operating-side casing 130 and the display-side casing 120 move away from each other is assisted by the restoring force acting to increase the distance between the one end and the other end of the slide assisting spring 170.
When the mobile phone 110 is in the storage mode, little external force is applied to the coaxial cable 180.
In the course of transformation of the mobile phone 110 from the storage mode to the talking mode, the coaxial cable 180 is slightly deformed by the decrease in distance between one end and the other end. When the mobile phone 110 is deformed to the talking mode, little external force is applied to the coaxial cable 180.

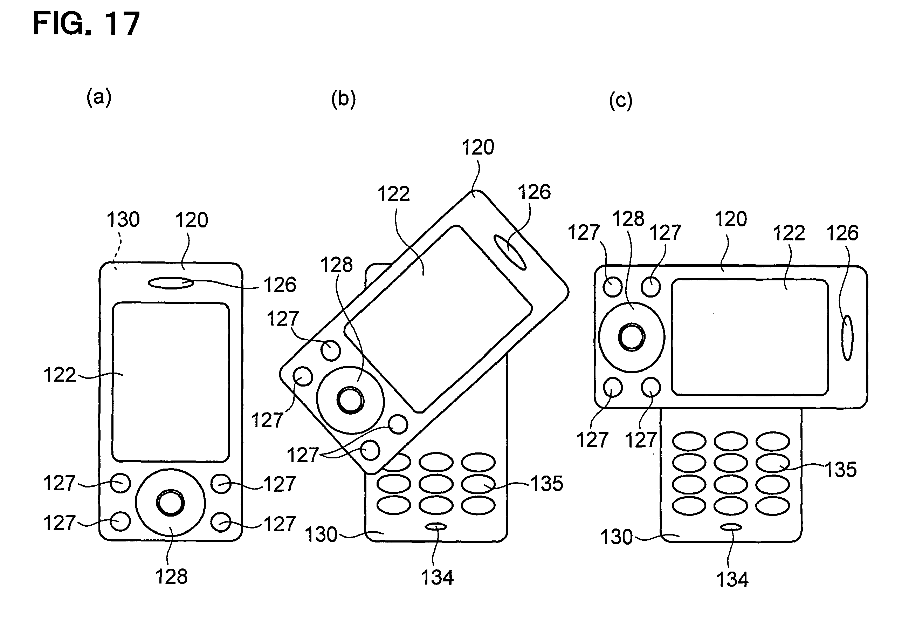

Fig. 17 is an explanatory drawing showing an action when the mobile phone 110 is transformed so that the operating-side casing 130 and the display-side casing 120 are slid with respect to each other.
Fig. 17 (a) is a pattern diagram of the mobile phone 110 showing the storage mode. Fig. 17 (b) is a pattern diagram of the mobile phone 110 in a shape in the course of transformation into the mode of the mobile phone 110 for viewing TV images or laterally elongated still pictures or movies (hereinafter, referred to as "image viewing mode").
Fig. 17 (c) is a pattern diagram of the mobile phone showing the image viewing mode.

Referring to Fig. 17 (a) to Fig. 17 (c), an action to rotate the operating-side casing 130 and the display-side casing 120 of the mobile phone 110 with respect to each other in a state in which the front surface 131 of the operating-side casing 130 and the back surface 125 of the display-side casing 120 are laid one on top of the other will be described.

In the storage mode, the operating-side casing 130 and the display-side casing 120 are laid completely one on top of the other. When the operating-side casing 130 and the display-side casing 120 of the mobile phone 110 are rotated with respect to each other from this state with the front surface 131 of the operating-side casing 130 and the back surface 125 of the display-side casing 120 laid one on top of the other, the longitudinal direction of the display device 122 forms an angle of about 90° with respect to the longitudinal direction of the operating-side casing 130. Consequently, the laterally elongated images such as the TV image can be viewed without problem while holding the operating-side casing 130 as in the case of inputting a mail text.

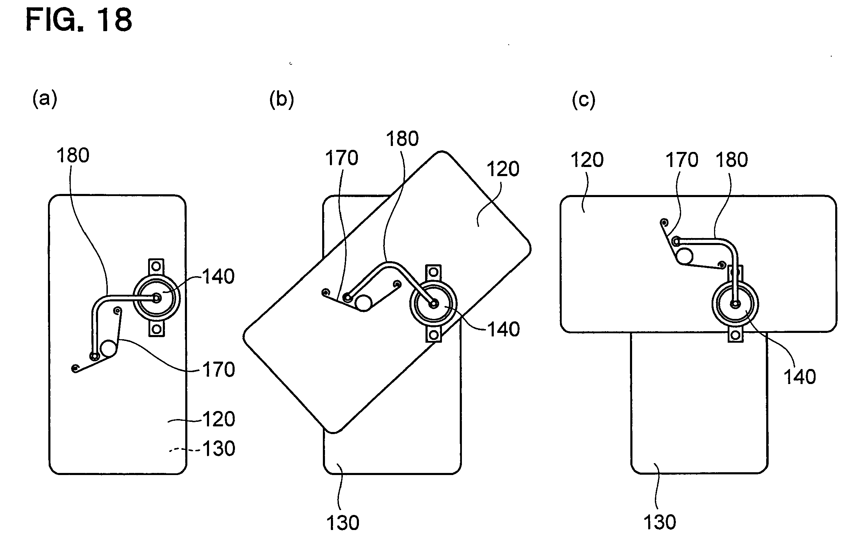

Fig. 18 (a) is a pattern diagram of the mobile phone 110 showing a positional relationship among the rotatably engaging unit 140, the slide assisting spring 170 and the coaxial cable 180 of the mobile phone 110 in the storage mode. Fig. 18 (b) is a pattern diagram of the mobile phone 110 showing the positional relationship among the rotatably engaging unit 140, the slide assisting spring 170 and the coaxial cable 180 of the mobile phone 110 in the course of transformation to the image viewing mode.

Fig. 18 (c) is a pattern diagram of the mobile phone 110 showing the positional relationship among the rotatably engaging unit 140, the slide assisting spring 170 and the coaxial cable 180 of the mobile phone 110 in the image viewing mode. As shown in Fig. 17, the rotatably engaging unit 140, the slide assisting spring 170 and the coaxial cable 180 are not visible when viewing the display-side casing 120 from the outside. However, in Fig. 18, the rotatably engaging unit 140, the slide assisting spring 170 and the coaxial cable 180 are shown as being visible for convenience.

Referring to Fig. 13 and Fig. 18 (a) to Fig. 18 (c), a state in which the positional relationship among the rotatably engaging unit 140, the slide assisting spring 170 and the coaxial cable 180 of the mobile phone 110 is changed with the sliding action and a state in which the rotation-receiving member 141 and the cam 142 rotate with respect to each other will be described.

In the storage mode, the operating-side casing 130 and the display-side casing 120 are completely laid one on top of the other. In this state, the restoring force is not generated in the slide assisting spring 170 and the coaxial cable 180.

On the other hand, in this state, the positional relationship between the rotation-receiving member 141 and the cam 142 is as shown in Fig. 13.

In the course of transformation of the mobile phone 110 from the storage mode to the image viewing mode, the slide assisting spring 170 and the coaxial cable 180 are not deformed.

On the other hand, when the mobile phone 110 is transformed from the storage mode to the image viewing mode, in the initial state of the transformation, the cam projection 142b of the cam 142 slides upward on the inclined surface of the cam-receiving recess 141f. When rotation of the cam 142 with respect to the fixed portion 141a (in other words, the rotation of the display-side casing 120 with respect to the operating-side casing 130) is stopped in a state in which the cam projection 142b is in abutment with the inclined surface of the cam-receiving recess 141f, the cam projection 142b of the cam 142 moves downward on the inclined surface of the cam-receiving recess 141f to return the state shown in Fig. 13. This is because that the cam 142 is constantly urged in the direction D toward the fixed plate portion 141b by the rotation assisting spring (not shown).

When the transformation from the storage mode to the image viewing mode is proceeded to a certain extent, the cam projection 142b gets out from the cam-receiving recess 141f and comes into abutment with the fixed plate portion 141b. In this sate, even though the cam 142 is urged by the rotation assisting spring (not shown) in the direction D, the cam 142 does not move with respect to the fixed portion 141a.

When the transformation from the storage mode to the image viewing mode is further proceeded, the cam projection 142b comes into abutment with the inclined surface of the image viewing mode cam-receiving recess 141g. When the rotation of the cam projection 142b with respect to the fixed portion 141a (that is, the rotation of the display-side casing 120 with respect to the operating-side casing 130) is stopped in this state, the cam projection 142b moves automatically downward on the inclined surface of the image viewing mode cam-receiving recess 141g (that is, the rotation of the display-side casing 120 with respect to the operating-side casing 130 proceeds automatically). The reason why such an automatic action is achieved is that the cam 142 is urged in the direction D by the rotation assisting spring (not shown).

In this manner, the transformation of the mobile phone 110 to the image viewing mode shown in Fig. 18 (c) is completed.

The mobile phone 110 according to the second embodiment is configured as described thus far.

In this manner, according to the mobile phone 110 in the second embodiment, since the rotatably engaging member 140 that allows the lower casing to rotate with respect to the upper casing from the state in which the lower casing (operating-side casing 130) and the upper casing (display-side casing 120) are laid one on top of the other is provided, the mobile phone 110 is transformed into the image viewing mode in which the upper casing intersects with the lower casing at about an angle of 90° with one action.

In addition, since the axial line C of the rotatably engaging unit 140 is provided at the position deviated from the widthwise center of the lower casing, the image viewing mode transformed with one action is close to a symmetrical shape which provides comfort in terms of human engineering. Therefore, the mobile phone having both the characteristics of being superior in terms of human engineering and user-friendliness which achieves the transformation with one action is provided.

Furthermore, since the image viewing mode transformed with one action has a symmetrical shape, the center of gravity of the mobile phone 110 is close to the center, and hence a good sense of stability is provided when the user holds the mobile phone 110. Therefore, when the user views the TV for a long time, fatigue which the user feels is reduced significantly.

In the mobile phone according to the second embodiment of the present invention, there is provided the transformation unit (slidably engaging unit 150) which allows the upper casing and the lower casing to be transformed into the talking mode by an action different from the rotating action by the rotatably engaging unit 140.

On the other hand, assuming that the lower casing and the upper casing are engaged only with the rotatably engaging unit provided at the position deviated from the widthwise center of the lower casing or the upper casing, the lower casing and the upper casing are not arranged straight at all in the state in which the lower casing and the upper casing are rotated with respect to each other.

Therefore, the symmetry in the talking mode in which the talking unit (microphone 134) and the receiving unit (speaker 126) are positioned away from each other is impaired. Therefore, the comfort in terms of human engineering is not achieved in the talking mode. Furthermore, the sense of stability in the state of being held is lowered.

However, according to the second embodiment, since the transformation to the talking mode by the action different from the rotating action by the rotatably engaging unit is achieved, the symmetry of the shape can be maintained also in the state of being transformed into the talking mode. Therefore, the comfort obtained from the mobile phone is increased in terms of human engineering.

Since the symmetry property in the talking mode is superior, the center of gravity of the mobile phone is close to the center even in the talking mode. Therefore, the sense of stability that the user feels when holding the mobile phone is increased.

In particular, when input of text is performed for a long time, for example, in the case of generating the e-mail text, fatigue that the user feels is significantly reduced.

In the mobile phone according to the second embodiment of the present invention, the transformation unit is the slidably engaging unit that slidably engages the upper casing and the lower casing with respect to each other.

On the other hand, when transformation from the storage mode to the talking mode is assumed to be a first rotation, and transformation from the storage mode to the image viewing mode is assumed to the a second rotation which is different from the first rotation as in the mobile phone described in the first embodiment, erroneous transformation to the image viewing mode instead of the talking mode may occur.

However, according to the second embodiment, when transforming from the storage mode to the talking mode, the upper casing and the lower casing are slid with respect to each other, and when transforming from the storage mode to the image viewing mode, the upper casing and the lower casing are rotated with respect to each other. Accordingly probability of erroneous transformation to the image viewing mode when receiving phone calls is reduced. Therefore, telephone call can be started quickly in comparison with the case of having to transform from the image viewing mode once to the storage mode and then to the talking mode.

The rotatably engaging unit in the second embodiment includes a rotation allowing member (cam 142) engaged with the Lower casing so as to allow rotation, and a rotation restricting member (slider plate 143) being fixed with the rotation allowing member and being engaged with the upper casing so as to restrict the rotation, and the slidably engaging unit includes a slide allowing member (slider plate 143) engaged with the upper casing so as to allow a sliding movement and a slide restricting member (cam 142) engaged with the lower casing so as to restrict the sliding movement. The slide restricting member corresponds to the rotation allowing member.

Therefore, since a part of the rotatably engaging unit is used also as a part of the slidably engaging unit, a space for installing the engaging unit can be reduced.

In the second embodiment, the slide-rotation restricting member (slide-rotation restricting wall portion 151f) that restricts further rotation of the upper casing with respect to the lower casing when the lower casing and the upper casing are shifted from each other by the sliding movement of the upper casing with respect to the lower casing is provided.

When the upper casing and the lower casing are configured to be able to be slid and rotated with respect to each other, there may be a case of transforming the lower casing and the upper casing from the storage mode to the talking mode, and then rotating the upper casing with respect to the lower casing. When such a transformation is performed, there appears a portion of the front surface of the lower casing which is not covered by the upper casing only when such the transformation is performed.

When the portion which is exposed only when such the specific transformation is performed exists, there is a problem such that parts which may impair the appearance cannot be disposed in this portion.

However, according to the second embodiment, since such the specific transformation is restricted, the problem as described above is solved.

According to the second embodiment, a rotation-slide restricting member (rotation-slide restricting wall portion 151g) that restricts further sliding movement of the upper casing with respect to the lower casing when the lower casing and the upper casing are misaligned with respect to each other is provided.

When the upper casing and the lower casing are configured to be able to be rotated and slid with respect to each other, there may be a case of transforming the lower casing and the upper casing from the storage mode to the image viewing mode, and then sliding the upper casing with respect to the lower casing. When such a transformation is performed, there appears a portion of the front surface of the lower casing which is not covered by the upper casing only when such the transformation is performed.

When the portion which is exposed only when such the specific transformation is performed exists, there is a problem such that parts which may impair the appearance cannot be disposed in this portion.

However, according to the second embodiment, since such the specific transformation is restricted, the problem as described above is solved.

Third Embodiment

Referring now to the drawings, a third embodiment of the invention will be described.

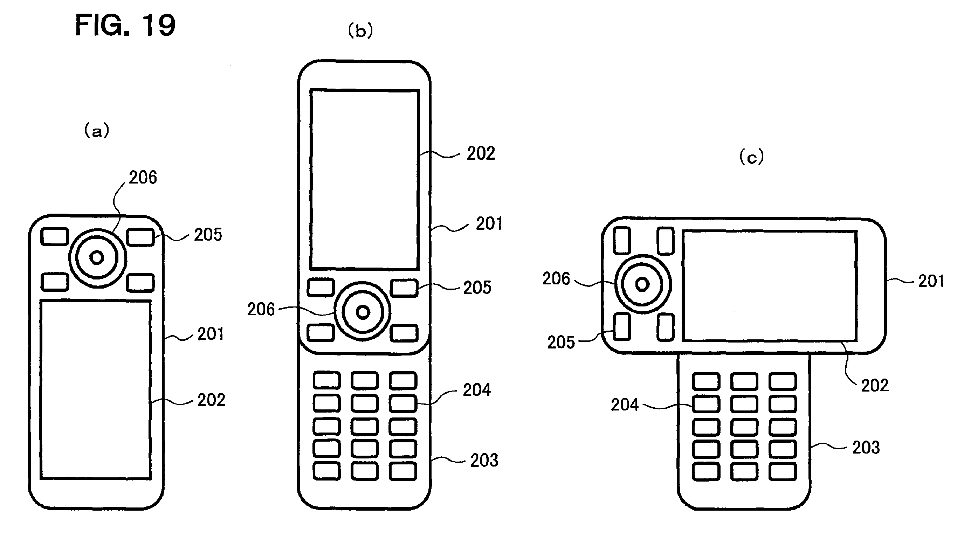

Fig. 19 is a plan view showing an example of a case in which the present invention is applied to the mobile phone, in which Fig. 19 (a) shows a state in which two casings are closed, Fig. 19(b) shows a state in which the two casings are opened by rotating about a hinge by 180°, and Fig. 19 (c) shows a state of being slid about the hinge by 90°.

In the drawings, reference numeral 201 designates a display-side casing having an LCD display device 202 provided on the front surface side, and reference numeral 203 designates an operating-side casing having the operating buttons 204 such as ten keys arranged on the display side.

The display-side casing 201 includes a plurality of function keys 205 and a direction key 206 so as to enable operation of the mobile phone in the closed state.

The mobile phone according to the third embodiment is provided for the user to be used in a compact mode closed as in Fig. 19(a) when being carried in the pocket or the bag, a mode in which the display-side casing 201 and the operating-side casing 203 are arranged straight as in Fig. 19(b) when being used for telephone calls or providing a vertically elongated screen display on the display device 202, and a mode in which the display-side casing 201 and the operating-side casing 203 are arranged into a T-shape as in Fig. 19(c) when being used for displaying a mail text or the TV display in the laterally elongated orientation.

Before describing the detailed configuration, operation to arrange the display-side casing 201 and the operating-side casing 203 straight by opening and to close the same will be described briefly.

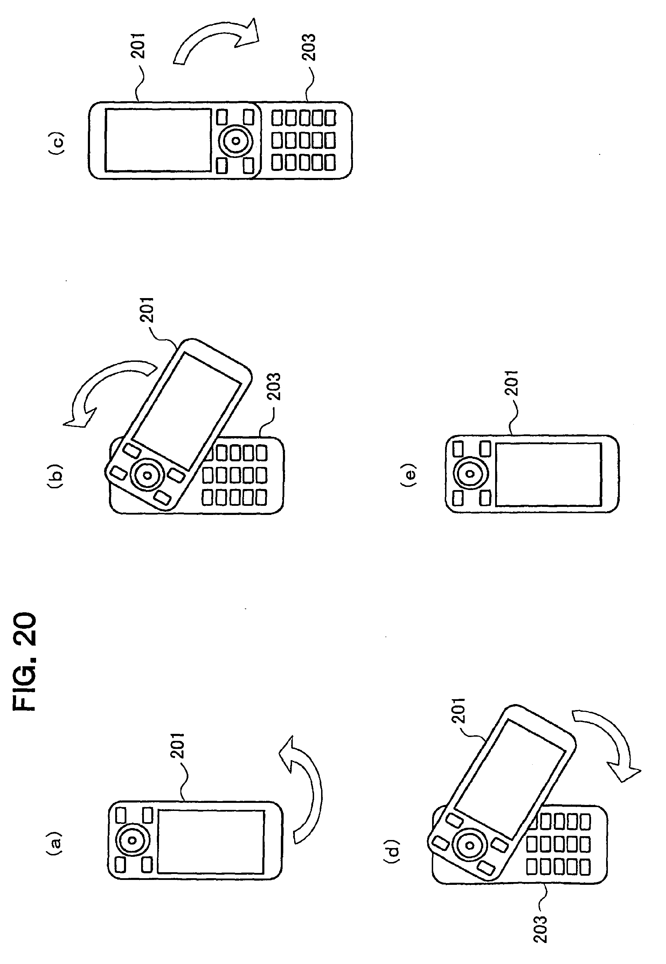

Fig. 20 is a drawing schematically showing operation to arrange the display-side casing 201 and the operating-side casing 203 straight by opening or to close the same, in which Fig. 20 (a) shows a state in which the back surface of the display-side casing 201 and the front surface of the operating-side casing 203 are laid one on top of the other into a closed mode.

When the display-side casing 1 is rotated counterclockwise to a position beyond the position in the same drawing (b) on the paper plane as indicated by an arrow from this state, the display-side casing 1 and the operating-side casing 203 are arranged straight as in the same drawing (c) by the action of a hinge device (described later in detail). When the display-side casing 201 is rotated clockwise to a position beyond the position in the same drawing (d) on the paper plane as indicated by an arrow from this state, the display-side casing 201 and the operating-side casing 203 are arranged in the closed state as in the same drawing (e) by the action of the hinge device.

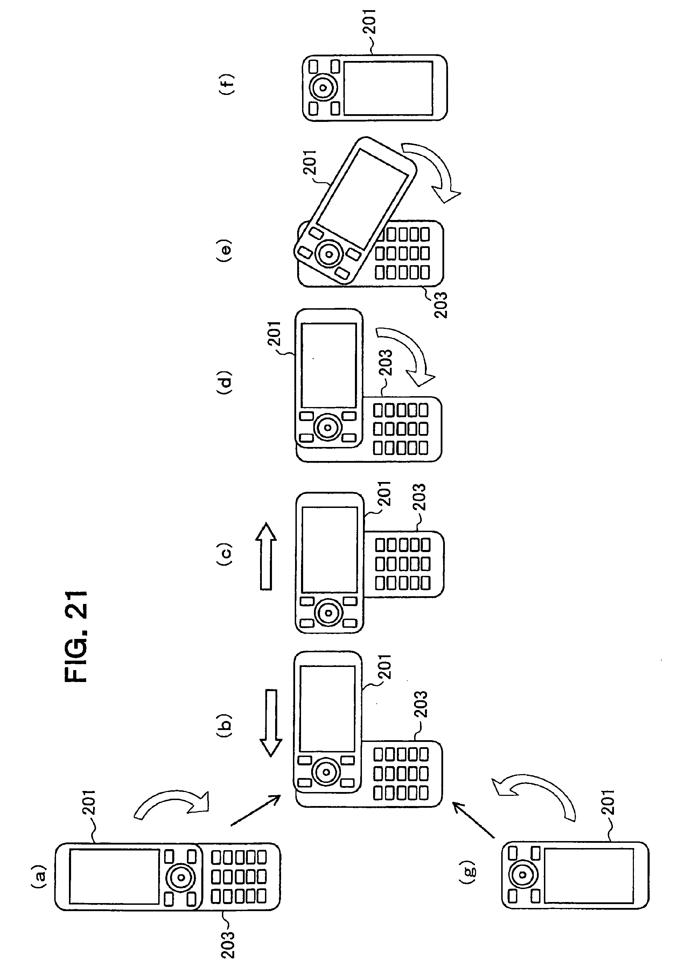

On the other hand, Fig. 21 is a drawing schematically showing operation when the display-side casing 201 and the operating-side casing 203 are opened into a T-shape or to arrange the same to the closed state, in which Fig. 21 (a) shows a state in which the display-side casing 201 and the operating-side casing 203 are opened straight.

When the display-side casing 201 is rotated clockwise on the paper plane by 90° as indicated by an arrow in the drawing from this state, a state shown in the same drawing (b) is achieved, so that sliding movement is enabled.

When the display-side casing 201 is slid leftward on the paper plane in this state, the display-side casing 201 and the operating-side casing 203 are arranged in a T-shape as in the same drawing (c).

Subsequently, when the display-side casing 201 is slid rightward on the paper plane from this state, a state shown in the same drawing (d) is achieved, and when the display-side casing 201 is rotated clockwise to a position beyond the position shown in the same drawing (e) as indicated by an arrow in the drawing from this state, the display-side casing 201 and the operating-side casing 203 are arranged in the closed sate as shown in the same drawing (f) by the action of the hinge device.

Fig. 21 (g) shows a state in which the display-side casing 201 and the operating-side casing 203 are closed. When the display-side casing 1 is rotated counterclockwise on the paper plane by 90° from this state, the state in the same drawing (b) as indicated by an arrow in the drawing is achieved, whereby the state in changed from then on in the sequence of (c), (d), (e) and (f).

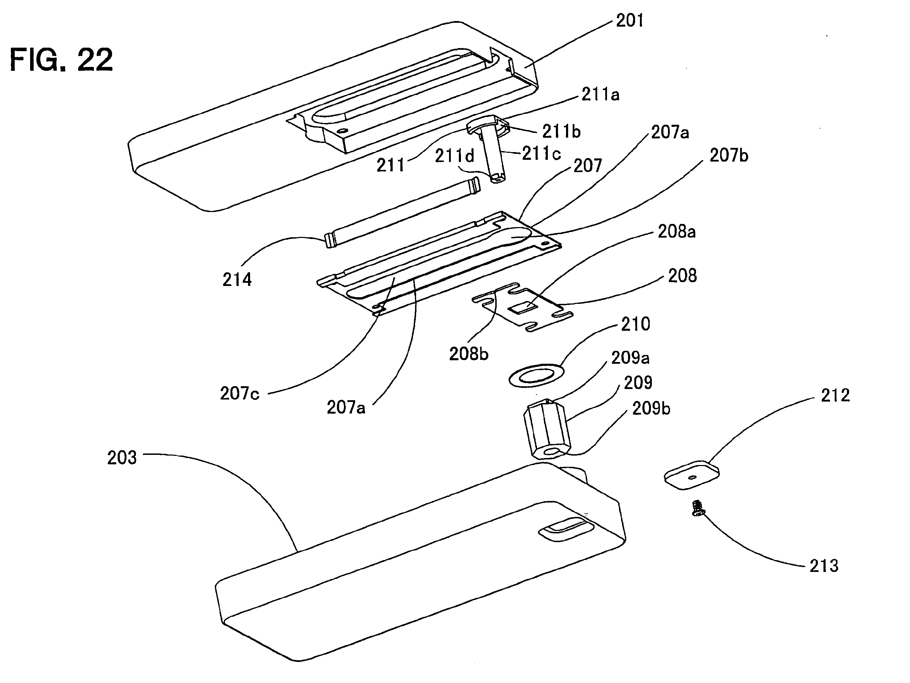

Referring now to Fig. 22, a configuration of the hinge device for connecting the display-side casing 201 and the operating-side casing 203 operated to open and close as described above and the sliding mechanism will be described. Fig. 22 is a deployed assembly drawing showing a configuration of the hinge device and the sliding mechanism according to the third embodiment.

In Fig. 22, reference numeral 207 designates a slide rail fixed to the display-side casing 201, and includes a rail portion 207a having a cross-section of substantially angular C-shape, a circular rotating member hole 207b, and a rotation control hole 207d having a sliding member hole 207c in the shape of an elongated hole formed integrally. A slide plate 208 engages the rail portion 207a so as to be capable of moving horizontally but not to be capable of rotating, and the slide plate 208 is provided with a square hinge-engagement hole 208a and a notch 208b.

Reference numeral 209 designates a hinge device to be mounted to the operating-side casing 203 so as not to be capable of rotating, and includes a hinge shaft 209a having a square boss and a cylindrical hole 209b at the axial center thereof. A boss of the hinge shaft 209a is fitted into the square hinge-engagement hole 208a of the slide plate 208 described above. Reference numeral 210 designates a washer A provided between the slide plate 208 and the hinge 209 in a state in which the hinge shaft 209a is passed therethrough.

Reference numeral 211 is a rotation control plate which engages the rotation control hole 207d of the slide rail 207, having a circular basic shape which is engageable with the rotating member hole 207b of the slide rail and including a rotation control unit 211b having cut surfaces 211a which enables engagement with the sliding member hole 207c and a shaft portion 211c.

The shaft portion 211c is provided with a screw hole 211d at the distal end thereof, and is assembled to the operating-side casing 203 by screwing a screw 213 into the screw hole 211d from the back surface of the operating-side casing 203 via a washer B 212 in a state in which the shaft portion 211c is penetrated through the hinge-engagement hole 208a, a washier A 210, and the cylindrical hole 209b.

Reference numeral 214 is a leaf spring which is engageable with the notch 208b on a slide plate fixed to the slide rail 207.

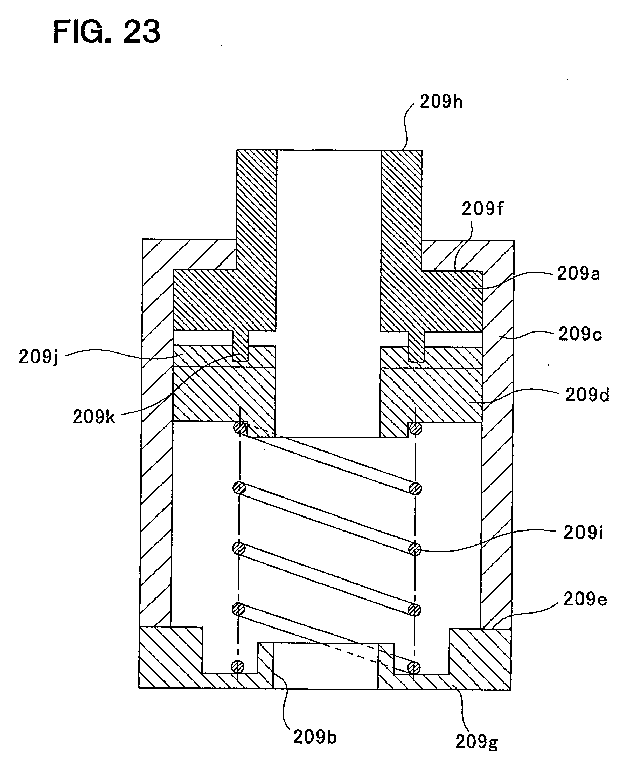

Referring also to Fig. 23, a detailed configuration of the hinge device 209 will be described.

In Fig. 23, a hinge body 209c has a cylindrical shape having an outer surface of an octagonal prism that engages a mounting hole provided on the operating-side casing 203 so as not to be capable of rotating, and has an inner surface formed by hollowing out in the shape of a octagonal prism to achieve engagement with a sliding member 209d, described later.

The hinge body 209c is provided with an engaging hole 209e on a side surface near one end thereof, and a hinge shaft abutment wall 209f extending toward the center axis at the other end thereof.

On the other hand, a bottom plate 209g is an octagonal plate corresponding to the shape of the inner surface of the hinge body 209c, and is engaged with the engaging hole 209e to form the hinge device 209.

The hinge body 209c is provided with the hinge shaft 209a abutted with the hinge shaft abutment wall 209f and rotatably supported on the inner surface of the hinge body 209c so as to cause a cylindrical shaft portion 209h to perform a sliding movement thereon, and an octagonal sliding member 209d supported by the hinge body 209c so as not to be capable of rotating.

A coil spring 209i urges the sliding member 209d to presses the sliding member 209d against the hinge shaft 209a. The sliding member 209d is formed with an end surface cam 209j on an end surface thereof which comes into abutment with the hinge shaft 209a, and the hinge shaft 209a is provided with two driven pins 209k on an end surface which comes into abutment with the sliding member 209d so as to project therefrom.

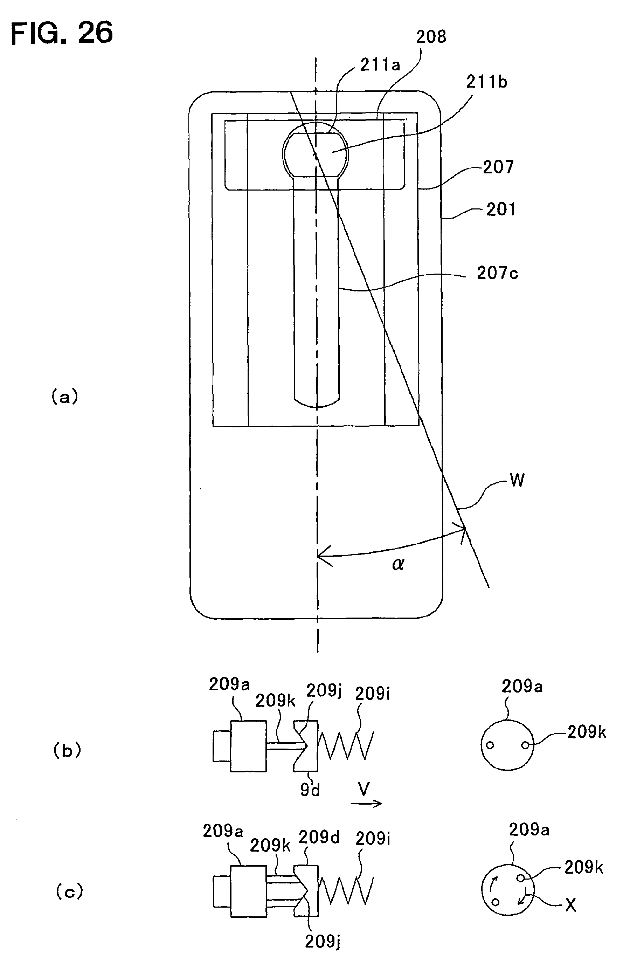

Subsequently, referring now to Fig. 26 to Fig. 29, an action of the hinge device and the sliding mechanism configured as describe thus far will be described.

Fig. 26 (a) is a drawing showing the hinge device and the sliding mechanism seen from the display-side casing 201 through the display-side casing 201 in the state in which the display-side casing 201 and the operating-side casing 203 are closed.

Fig. 26(b) shows a positional relationship between the sliding member 209d and the hinge shaft 209a in this state. As shown in Fig. 26(b), the driven pins 209k are located at the lowest positions of the cam surface of the end surface cam 209j. In this state, the amount of contraction of the coil spring 209i is the smallest.

In Fig. 26 (a), when a rotational force is applied to the display-side casing 201 from the outside, the rotational force acts on the hinge shaft 209a engaged with the slide plate 208 so as not to be capable of rotating via the slide rail 207 fixed to the display-side casing 201 and the slide plate 208 engaged with the slide rail 207 so as not to be capable of rotating, so that the hinge shaft 209a rotates and the sliding member 209d makes an attempt to move in the direction to contract the coil spring 209i (an arrow V in the same drawing (b)). Here, the sliding member 209d receives a reaction force from the coil spring 209i and the reaction force works as a resistance force of the rotation of the sliding member 209d.

In this state, the rotation control plate 211 is fixed in the orientation in which the cut surface 211a intersects orthogonally to the longitudinal direction of the operating-side casing 203, and is arranged in the direction in which the longitudinal direction of the sliding member hole 207c intersects orthogonally to the cut surface 211a. Therefore, it is impossible that the rotation control unit 211b engages the sliding member hole 207c. Therefore, the display-side casing 201 is held in a state of being rotatable with respect to the operating-side casing 203 and being stable for rotation and, at the same time, being incapable of sliding movement.

Fig. 26(c) shows a positional relationship between the sliding member 209d and the hinge shaft 209a when the display-side casing 201 is at a position indicated by a line W (at an opening angle α) in the same drawing (a).

In the same drawing (c), the angular position of the hinge shaft 209a with respect to the closed state described above is different. Then, the sliding member 209d is in a state of being moved by being pressed by the driven pins 209k according to the setting of the cam surface. The coil spring 209i is further compressed than in the closed state, and a reaction force corresponding to the compression is provided to the sliding member 209d.

Since the driven pins 209k and the end surface cam 209j are in contact with each other on the inclined surface of the cam surface, a running torque on the basis of the reaction force of the coil spring 209i acts on the driven pins 209k.

The direction of the running torque is the direction indicated by X in the drawing. When the display-side casing 201 is opened from this state, the hinge shaft 209a rotates in the direction indicated by the arrow X, and the slide plate 208 engaged with the hinge shaft 209a rotates. Then, simultaneously, the slide rail 207 with which the slide plate 208 engages so as not to be capable of rotating is rotated, and simultaneously, the display-side casing 201 to which the slide rail 207 is fixed is opened.

Fig. 27 (a) is a drawing showing the hinge device and the sliding mechanism seen from the display-side casing 201 through the display-side casing 201 in a state in which the display-side casing 201 and the operating-side casing 203 are opened.

Fig. 27(b) shows a positional relationship between the sliding member209d and the hinge shaft 209a in this state. In this state, as in the case of Fig. 26(a), the display-side casing 201 is held in a state of being rotatable with respect to the operating-side casing 203 and being stable for rotation and, at the same time, being incapable of sliding movement.

Fig. 28(a) is a drawing showing the hinge device and the sliding mechanism seen from the display-side casing 201 through the display-side casing 201 in a state in which the display-side casing 201 and the operating-side casing 203 are opened by 90°.

Fig. 28(b) shows a positional relationship between the sliding member 209d and the hinge shaft 209a in this state. In the same drawing (b), the sliding member 209d is in a state of being moved by being pressed by the driven pins 209K according to the setting of the cam surface, and a rotational force acts on the display-side casing 201.

The rotation control plate 211 is fixed in the orientation in which the cut surface 211a intersects orthogonally to the longitudinal direction of the operating-side casing 203 and is arranged in the direction in which the longitudinal direction of the sliding member hole 207c and the cut surface 211a are arranged in parallel with each other. Therefore, the rotation control unit 211b is in a state of being engaged with the sliding member hole 207c. In this state, the display-side casing 201 is capable of being slide with respect to the operating-side casing 203 in the direction indicated by an arrow Y.

When the display-side casing 201 is slid, the slide rail 207 fixed to the display-side casing 201 is slid and moved simultaneously, so that the leaf spring 214 fixed to the slide rail 207 is engaged with the notch 208b and hence the display-side casing 201 and the operating-side casing 203 are fixed in a T-shape.

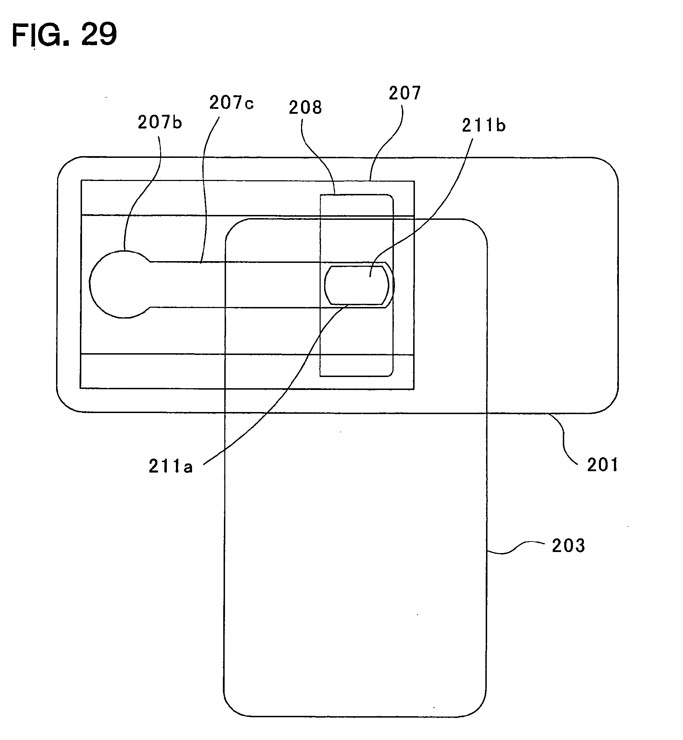

Fig. 29 is a drawing showing the hinge device and the sliding mechanism seen from the display-side casing 201 through the display-side casing 201 in a state in which the display-side casing 201 and the display-side casing 203 are fixed in a T-shape.

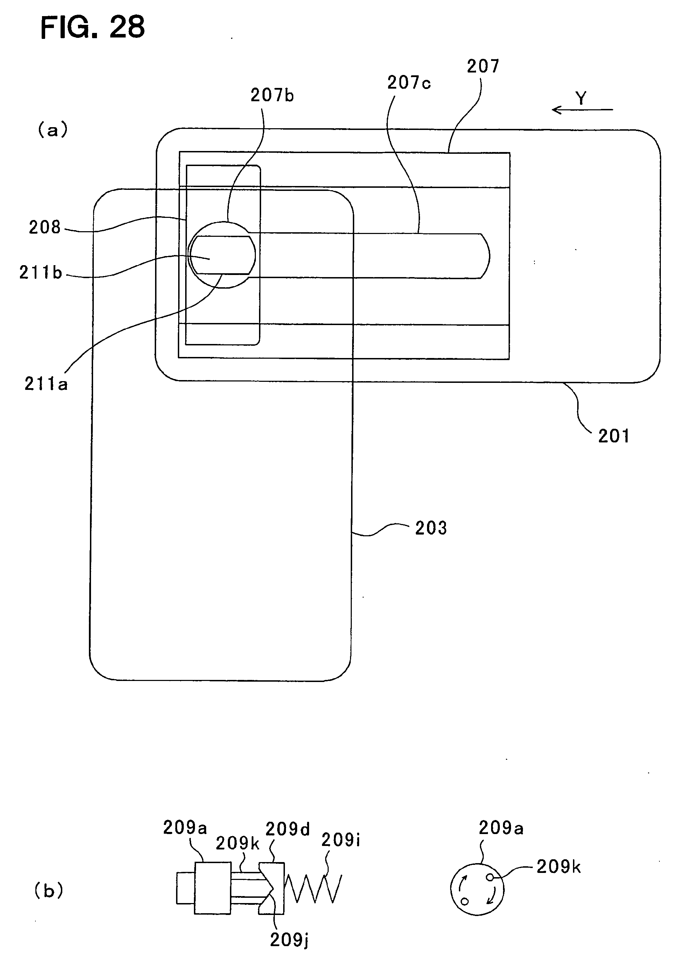

When the display-side casing 201 is slid from the state of being fixed into a T-shape shown in Fig. 29 in the opposite direction from the arrow Y shown in Fig. 28(a), engagement between the leaf spring 214 and the notch 208b is released and hence the state shown in Fig. 28 (a) is achieved. When the user release the hand from the display-side casing 201 in this state, the display-side casing 201 and the operating-side casing 203 are brought into the closed state as shown in Fig. 26(a) by the rotational force acting on the display-side casing 201.

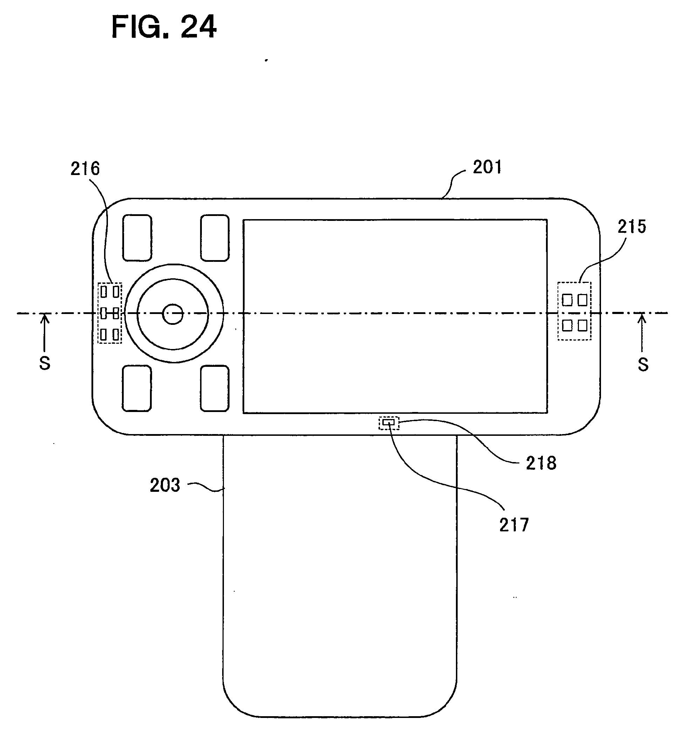

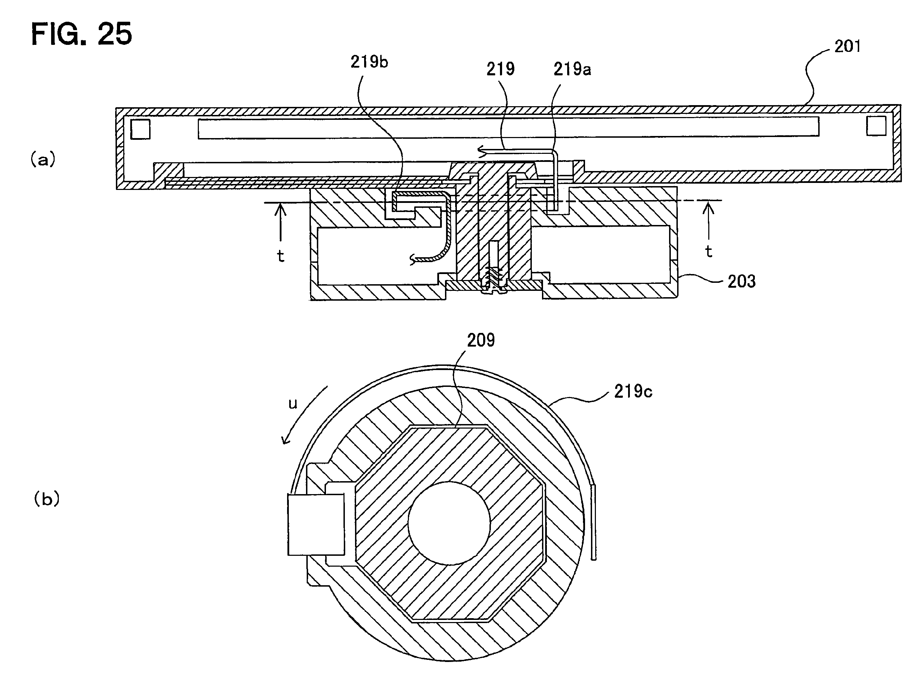

Subsequently, Fig. 24 and Fig. 25 are described.

Fig. 24 shows a state in which the display-side casing 201 and the operating-side casing 203 are fixed into a T-shape. In the same drawing, reference numeral 215 designates a receiver mounted in the display-side casing 201, reference numeral 216 designates a speaker for ringing a ring tone or the like, reference numeral 217 designates a Hall element mounted in the operating-side casing for detecting that the display-side casing 201 and the operating-side casing 203 are arranged in a T-shape, and reference numeral 218 designates a magnet 218 for switching the Hall element 217.

In the state shown in Fig. 24, the Hall element 217 and the magnet 218 are arranged at a position of being laid substantially one on top of the other, so that the Hall element 217 detects a magnetic force of the magnet 218 to achieve the switching function. Through the switching action of the Hall element 218, an amplifier circuit connected to the receiver 215 is switched to an amplifier circuit having a larger amount of amplification. Accordingly, the display of the LCD display device 202 is switched from the vertical display mode to the lateral display mode and the amount of amplification of voice signals inputted to the receiver 215 is increased, so that stereo-effect sound is generated in combination with the speaker 216.

Fig. 25 shows a state of a signal line laid in the display-side casing 201 and the operating-side casing 203, in which Fig. 25(a) is a cross-sectional view taken along a line s-s in Fig. 24, Fig. 25(b) is a cross-sectional view of a principal portion taken along a line t-t in Fig. 25(a).

In the drawing, reference numeral 219 designates a flexible cable for electrically connecting the display-side casing 201 and the operating-side casing 203, reference numeral 219a designates a first bent portion, reference numeral 219b designates a second bent portion and reference numeral 219c designates a wound portion. When the display-side casing 201 is rotated in a direction u with respect to the operating-side casing 203, the flexible cable 219 is displaced in the winding direction about the hinge device 209.

That is, the flexible cable 219 passes from the operating-side casing through the gap between the hinge device 209 and the operating-side casing and is led out to the upper surface of the display-side casing 201. At this position, the flexible cable 219 forms the wound portion so as to be wound around the hinge device 209. Then, it passes through the bent portion and led to the operating-side casing.

The change of the length that the flexible cable 219 needs when the display-side casing 201 and the operating-side casing 203 are relatively displaced may be absorbed by the wound portion when rotated and by the bent portion when being slid so that generated distortion is reduced to secure the durability.

The flexible cable 219 is a flexible printed board, and a connector provided on the surface of the flexible printed board is fitted to a connector provided on a printed board (not shown) arranged in the operating-side casing 203 or the display-side casing 201, whereby the flexible cable 219 and the printed board are electrically connected.

As described above, according to the third embodiment of the invention, in the mobile device including the first casing having the operating panel and the second casing having the display and being arranged so as to be laid on top of the first casing, when the second casing is rotated about the hinge device by 180°, the first casing and the second casing are opened straight, and when the second casing is rotated by 90°, the first casing and the second casing are opened into a T-shape. Therefore, the mobile device such as the mobile phone in which the orientation of the display may be converted between the vertically elongated orientation and the laterally elongated orientation, and hence operability is good and the thickness and the size are reduced is obtained.

In addition, since the hinge device may be arranged at the end of the casing, the mounting space is effectively used.

Since the flexible printed board is used as the flexible cable to be wound around the hinge device 209, specifically effective usage of the mounting space is achieved. Although the efficiency of usage of the mounting space is lower than the flexible printed board, the orientation of the display may be converted between the vertically elongated orientation and the Laterally elongated orientation even when the coaxial cable is used as the flexible cable, and the mobile device such as the mobile phone in which operability is good and the thickness and the size are reduced is also obtained.

Since the receiver and the speaker are provided on the both sides of the second casing with the intermediary of the display arranged in the laterally elongated orientation, a solid sound corresponding to the big screen is effectively provided.

A wiring groove is provided on a fitting surface of the first casing and the hinge device, the flexible cable for electrically connecting the first casing and the second casing is arranged in the wiring groove, and the flexible cable absorbs the change in length of the cable caused by the relative movement of the first casing and the second casing. Therefore, reliability of electrical connection is secured, and hence the durability is also secured.

Industrial Applicability

As an example of application of the present invention, it may be applied to the mobile device such as the mobile phone having the two casings connected so as to be capable of opening and closing.

Brief Description of the Drawings

Fig. 1 is a plan view showing an embodiment to which the present invention is applied to a mobile phone.
Fig. 2 is a drawing schematically showing operation to arrange a display-side casing and an operating-side casing according to the present invention straight.
Fig. 3 is a drawing schematically showing operation when the display-side casing and the operating-side casing according to the present invention are arranged into a T-shape.
Fig. 4 is a developed assembly drawing showing a configuration of a hinge mechanism according to the present invention.
Fig. 5 is a perspective view showing a connecting strip for connecting a first hinge and a second hinge.
Fig. 6 is a perspective view showing a shaft of a component which constitutes the second hinge.
Fig. 7 illustrates the configuration of the hinge mechanism in a state in which the display-side casing and the operating-side casing are closed according to the present invention.

Fig. 8 illustrates the configuration of the hinge mechanism in a state in which the display-side casing according to the present invention is rotated counterclockwise by 180°.

Fig. 9 illustrates the configuration of the hinge mechanism in a state in which the display-side casing according to the present invention is rotated clockwise by 90°.

Fig. 10 is a cross-sectional view showing a state of a cable to be laid between the display-side casing and the operating-side casing.

Fig. 11 is a perspective view showing a configuration of the mobile phone according to a second embodiment of the present invention.

Fig. 12 is an exploded perspective view showing the configuration of the mobile phone according to the second embodiment of the present invention.

Fig. 13 is a cross-sectional view showing a configuration of a rotation-receiving member and a cam according to the second embodiment of the present invention.

Fig. 14 is a pattern diagram showing the mobile phone according to the second embodiment of the present invention.

Fig. 15 is an action explanatory drawing showing a sliding action of the mobile phone according to the second embodiment of the present invention.

Fig. 16 is an action explanatory drawing showing an internal configuration of the mobile phone at the time of sliding action of the mobile phone according to the second embodiment of the present invention.

Fig. 17 is an action explanatory drawing showing a rotating action of the mobile phone according to the second embodiment of the present invention.

Fig. 18 is an action explanatory drawing showing the internal configuration of the mobile phone at the time of rotating action of the mobile phone according to the second embodiment of the present invention.

Fig. 19 is a plan view of the mobile phone according to a third embodiment of the present invention.

Fig. 20 is a drawing schematically showing an operation for arranging the display-side casing and the operating-side casing straight and a reverse operation thereof according to the third embodiment of the present invention.

Fig. 21 is a drawing schematically showing an operation for arranging the display-side casing and the operating-side casing in a T-shape according to the third embodiment of the present invention.

Fig. 22 is a deployed assembly drawing showing a configuration of the hinge device and the sliding mechanism according to the third embodiment of the present invention.

Fig. 23 is a cross-sectional view showing a configuration of the hinge device according to the third embodiment of the present invention.

Fig. 24 is a plan view of the display-side casing and the operating-side casing arranged in a T-shape according to the third embodiment of the present invention.

Fig. 25 illustrates a state of a signal line laid in the display-side casing and the operating-side casing according to the third embodiment of the present invention.

Fig. 26 illustrates the configuration of the hinge device and the sliding mechanism of the display-side casing and the operating-side casing in the closed state according to the third embodiment of the present invention.

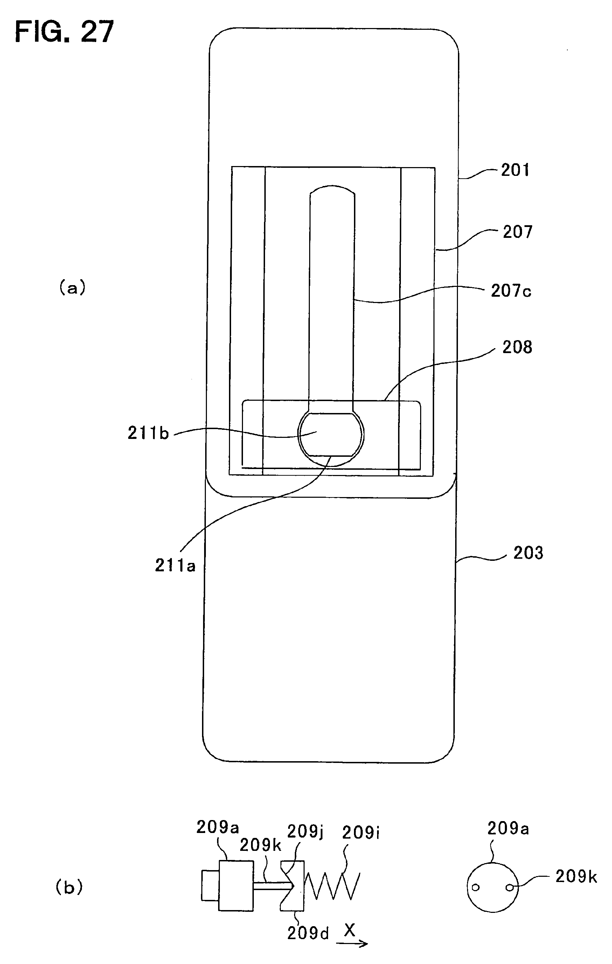

Fig. 27 is illustrates the configuration of the hinge device and the sliding mechanism in a state in which the display-side casing and the operating-side casing are opened by 180° according to the third embodiment of the present invention.

Fig. 28 illustrates the configuration of the hinge device and the sliding mechanism in a state in which the display-side casing and the operating-side casing are opened by 90° according to the third embodiment of the present invention.

Fig. 29 illustrates the configuration of the hinge device and the sliding mechanism in the state in which the display-side casing and the operating-side casing are arranged in a T-shape according to the third embodiment of the present invention.

Description of Reference Numeral and Signs

1 display-side casing, 2 display device, 3 operating-side casing, 7 first hinge, 8 stopper, 9 connecting strip, 11 second hinge

110: mobile phone,

120: upper casing, 121: front surface, 122: display device,

123: one end portion of upper casing in the longitudinal direction, 124: the other portion of upper casing in the longitudinal direction, 125: back surface,

130: lower casing, 131: front surface, 133: one end portion of lower casing in the widthwise direction, 140: rotatably engaging unit, 142: rotation allowing member (slide restricting member), 143: rotation restricting member (slide allowing member),

150: transformation unit (slidably engaging unit), 151: rotation-slide member (slide-receiving member), 151d: slide allowing groove, 151e: rotation allowing groove, 151f: slide-rotation restricting wall portion (slide-rotation restricting member), 151g: rotation-slide restricting member,

160: projection,

C: axial line, 201 display-side casing, 202 LCD display device, 203 operating-side casing, 204 operating button, 205 function key, 206 direction key, 207 slide rail, 208 slide plate, 209 hinge device, 210 washer A, 211 rotation control plate, 212 washer B, 213 screw, 214 leaf spring, 215 receiver, 216 speaker, 217 Hall element, 218 magnet, 219 flexible cable

## Claims

1. A mobile device comprising: a first casing having an electronic device mounted therein; a second casing having an electronic device including a display unit mounted therein; and a hinge for rotatably connecting the first casing and the second casing on one end sides thereof at a position deviated from the widthwise center in a state in which a front surface of the first casing and a back surface of the second casing are laid one on top of the other.

2. A mobile device comprising:

   a first hinge for rotatably connecting a first casing and a second casing on one end side thereof at the substantially widthwise center in a state in which a front surface of the first casing and a back surface of the second casing are laid one on top of the other; and
   a second hinge for rotatably connecting the first casing and the second casing on one end side thereof at a position deviated from the widthwise center in the state in which the front surface of the first casing and the back surface of the second casing are laid one on top of the other,

   wherein the first and second casings are rotatable about the first or second hinge in the state of being laid on one top of the other,
   wherein when the second casing is rotated from a closed state in a first direction, the second casing is rotated substantially by 180° about the first hinge so that the first and second casings are opened straight, and
   wherein when the second casing is rotated from the closed state in a second direction opposite from the first direction, the second casing is rotated substantially by 90° about the second hinge so that the first and second casings are opened into a T-shape.

3. The mobile device according to Claim 2, wherein the first hinge is mounted on one of the first and second casings, the second hinge is mounted to the other casing, and the first and second hinges are connected with a connecting strip.

4. The mobile device according to Claim 2, wherein the first hinge is prevented from rotating by a first stopper when the second casing is rotated in the second direction in the closed state, and the second hinge is prevented from rotating by a second stopper when rotated in the first direction.

5. The mobile device according to Claim 2, wherein an electronic device is provided in the first and second casings, the first casing is provided with operating keys for activating the electronic device on the front surface thereof, and the second casing is provided with a display device for displaying image data by the action of the electronic device on a front surface thereof.

6. The mobile device according to Claim 5, wherein the first and/or second casing(s) are/is provided therein with wireless communication means and an image processing device as electronic devices, the wireless communication means receives the image data via a wireless circuit, and the image processing means displays the received image data on the display device.

7. The mobile device according to Claim 6, wherein the wireless communication means receives television broadcastings, and the display device displays TV images.

8. The mobile device according to Claim 3, wherein the first and second casings are provided with electronic devices, and a signal line for transmitting signals between the first and second casings is wired along the first hinge, the connecting strip and the second hinge.

9. A mobile device comprising:

an upper casing having a display on a front surface thereof and being formed to have the longitudinal direction along the longitudinal direction of the display;

a lower casing being formed to have the longitudinal direction along the longitudinal direction of the upper casing and being laid on the upper casing so that a front surface thereof and a back surface of the upper casing are laid one on top of the other; and

a rotatably engaging unit that engages the upper casing with respect to the lower casing so as to be capable of rotating about an axial line which penetrates through the upper casing and the lower casing,

wherein the axial line is arranged at a position deviated from the widthwise center of the lower casing.

10. The mobile device according to Claim 9, wherein the axial line is provided at a position deviated in the direction toward one end portion of the lower casing in the widthwise direction,

the rotatably engaging unit is configured so that one end portion of the upper casing in the longitudinal direction, which is located at a position at a distance from an axial line shorter than a distance from the other end portion of the upper casing in the longitudinal direction, is capable of being arranged to a state of being rotated substantially by 1/4 turn with respect to the lower casing toward the one end portion of the lower casing in the widthwise direction.

11. The mobile device according to Claim 10, wherein the upper casing has a longitudinal side having a dimension L1 and a widthwise side having a width of W1 shorter than the longitudinal side,

the lower casing has a longitudinal side having a dimension L2 and a widthwise side having a width of W2 shorter than the longitudinal side,

when the upper casing and the lower casing are laid one on top of the other so that the longitudinal sides and the widthwise sides extend in parallel to each other, and when "a" is the amount of deviation between the longitudinal sides on one side and "b" is the amount of deviation between the widthwise sides which are adjacent to the longitudinal sides, and

when assembly errors of the amount of deviation "a" and the amount of deviation "b" are,

$$amin < a < amax$$

$$bmin < b < bmax,$$

respectively,

a distance X from the longitudinal side of the lower casing to substantially the center of the rotatably engaging unit satisfies

$$(2W1+W1-L1+2amin-2bmax)/4 < X$$

$$< (2W1+W1-L1+2amax-2bmin)/4$$

(provided that the positive value of the amount of deviation "a" is the amount of leftward deviation of the right end of the upper casing with respect to the right end of the lower casing, and the positive value of the amount of deviation "b" is the amount of downward deviation of the upper end of the upper casing with respect to the upper end of the lower casing) .

12. The mobile device according to Claim 10, wherein the upper casing has a longitudinal side having a dimension L1 and a widthwise side having a width of W1 shorter than the longitudinal side,

the lower casing has a longitudinal side having a dimension L2 and a widthwise side having a width of W2 shorter than the longitudinal side,

when the upper casing and the lower casing are laid one on top of the other so that the longitudinal sides and the widthwise sides extend in parallel to each other, and when "a" is the amount of deviation between the longitudinal sides on one side and "b" is the amount of deviation between the widthwise sides which are adjacent to the longitudinal sides, and

when assembly errors of the amount of deviation "a" and the amount of deviation "b" are,

$$\mathrm{amin} < a < \mathrm{amax}$$

$$\mathrm{bmin} < b < \mathrm{bmax,}$$

respectively,
a distance X from the longitudinal side of the lower casing to substantially the center of the rotatably engaging unit satisfies

$$(2W1+W1-L1-2amax-2bmin)/4 < X$$

$$< (2W1+W1-L1-2amin+2bmax)/4$$

(provided that the positive value of the amount of deviation "a" is the amount of rightward deviation of the right end of the upper casing with respect to the right end of the lower casing, and the positive value of the amount of deviation "b" is the amount of upward deviation of the upper end of the upper casing with respect to the upper end of the lower casing).

13. The mobile device according to Claim 10, wherein the upper casing has a longitudinal side having a dimension L1 and a widthwise side having a width of W1 shorter than the longitudinal side,
the lower casing has a longitudinal side having a dimension L2 and a widthwise side having a width of W2 shorter than the longitudinal side,
when the upper casing and the lower casing are laid one on top of the other so that the longitudinal sides and the widthwise sides extend in parallel to each other, and when "a" is the amount of deviation between the longitudinal sides on one side and "b" is the amount of deviation between the widthwise sides which are adjacent to the longitudinal sides, and
when assembly errors of the amount of deviation "a" and the amount of deviation "b" are,

$$\mathrm{amin} < a < \mathrm{amax}$$

$$\mathrm{bmin} < b < \mathrm{bmax,}$$

respectively,
a distance X from the longitudinal side of the lower casing to substantially the center of the rotatably engaging unit satisfies

$$(2W1+W1-L1+2amin+2bmin)/4 < X$$

$$< (2W1+W1-L1+2amax+2bmax)/4$$

(provided that the positive value of the amount of deviation "a" is the amount of leftward deviation of the right end of the upper casing with respect to the right end of the lower casing, and the positive value of the amount of deviation "b" is the amount of upward deviation of the upper end of the upper casing with respect to the upper end of the lower casing).

14. The mobile device according to Claim 10, wherein the upper casing has a longitudinal side having a dimension L1 and a widthwise side having a width of W1 shorter than the longitudinal side,
the lower casing has a longitudinal side having a dimension L2 and a widthwise side having a width of W2 shorter than the longitudinal side,
when the upper casing and the lower casing are laid one on top of the other so that the longitudinal sides and the widthwise sides extend in parallel to each other, and when "a" is the amount of deviation between the longitudinal sides on one side and "b" is the amount of deviation between the widthwise sides which are adjacent to the longitudinal sides, and
when assembly errors of the amount of deviation "a" and the amount of deviation "b" are,

$$amin< a <amax$$

$$bmin< b <bmax,$$

respectively,
a distance X from the longitudinal side of the lower casing to substantially the center of the rotatably engaging unit satisfies

$$(2W1+W1-L1-2amax-2bmax)/4 < X$$

$$< (2W1+W1-L1-2amin-2bmin)/4$$

(provided that the positive value of the amount of deviation "a" is the amount of rightward deviation of the right end of the upper casing with respect to the right end of the lower casing, and the positive value of the amount of deviation "b" is the amount of downward deviation of the upper end of the upper casing with respect to the upper end of the lower casing) .

15. The mobile device according to Claim 9, comprising a transformation unit for transforming the upper casing and the lower casing into a talking mode by an action different from the rotating action of the rotatably engaging unit.

16. The mobile phone according to Claim 15, wherein the transformation unit is a slidably engaging unit that engages the upper casing and the lower casing slidably with respect to each other.

17. The mobile device according to Claim 15, wherein the rotatably engaging unit includes a rotation allowing member engaged with the lower casing or the upper casing so as to allow rotation and a rotation restricting member fixed to the rotation allowing member and engaged with the upper casing or the lower casing so as to restrict the rotation thereof,
a slidably engaging unit includes a slide allowing member engaged with the upper casing or the lower casing so as to allow a sliding movement and a slide restricting member fixed to the slide allowing member engaged with the lower casing or the upper casing so as to restrict the sliding movement thereof, and
the slide restricting member corresponds to the rotation allowing member.

18. The mobile device according to Claim 15, comprising a slide-rotation restricting member that restricts further rotation of the upper casing with respect to the lower casing when the lower casing and the upper casing are deviated from each other by the sliding movement of the upper casing with respect to the lower casing.

19. The mobile device according to Claim 15, comprising: a projection provided so as to be fixed to the lower casing or the upper casing; and a groove provided on a rotation-slide member which rotates with respect to the lower casing or the upper casing, slides with respect to the lower casing or the upper casing, and is fixed to the upper casing or the lower casing, wherein the groove includes:

a slide allowing groove which allows the movement of the rotation-slide member with respect to the projection when a force is applied to the lower casing and the upper casing in the direction to cause the lower casing and the upper casing to slide with respect to each other in a state in which the lower casing and the upper casing are laid one on top of the other; and
a slide-rotation restricting wall portion to restrict the movement of the rotation-slide member with respect to the projection when a force is applied to the lower casing and the upper casing in the direction to cause the lower casing and the upper casing to rotate with respect to each other in a state in which the lower casing and the upper casing are slid with respect to each other.

**20.** The mobile device according to Claim 9, comprising:

a rotation-slide restricting member that restricts the upper casing from sliding with respect to the lower casing when the Lower casing and the upper casing are deviated from each other
by the rotation of the upper casing with respect to the lower casing.

**21.** The mobile device according to Claim 15, comprising: a projection provided so as to be fixed to the lower casing or the upper casing; and a groove provided on the rotation-slide member which rotates with respect to the lower casing or the upper casing, slides with respect to the lower casing or the upper casing, and is fixed to the upper casing or the lower casing, wherein the groove includes:

a rotation allowing groove which allows the movement of the rotation-slide member with respect to the projection when a force is applied to the lower casing and the upper casing in the direction to cause the lower casing and the upper casing to rotate with respect to each other in a state in which the lower casing and the upper casing are laid one on top of the other; and
a rotation-slide restricting wall portion to restrict the movement of the rotation-slide member with respect to the projection when a force is applied to the lower casing and the upper casing in the direction to cause the lower casing and the upper casing to slide with respect to each other in a state in which the lower casing and the upper casing rotate with respect to each other.

**22.** A mobile device comprising: a first casing having an operating panel and a second casing having a display and being arranged so as to be laid on top of the first casing, wherein the first casing and the second casing being opened straight when the second casing is rotated by 180°, and being opened into a T-shape when the second casing is rotated by 90°, includes a slide rail fixed to a surface opposing a surface of the second casing having the display, a slide plate being engaged with the slide rail so as to be capable of moving in the horizontal direction but not to be capable of rotating and having a hinge-engagement hole for being engaged with a hinge device, the hinge device being provided on the same surface where the operating panel of the first casing is installed, wherein the hinge device includes a hinge body fixed to the first casing so as not to be capable of rotating, a hinge shaft supported so as not to be capable of rotating with respect to the slide plate and so as to be capable of rotating with respect to the hinge body, a mounting boss forming a part of the hinge shaft and projecting from the hinge body, a sliding member provided so as to be slidable in the axial direction within the hinge body, and a resilient member A provided on the hinge body for urging the sliding member in the axial direction to bring the same into abutment with the hinge shaft, and the mounting boss and the hinge-engagement hole are engaged so as not to rotate with respect to each other.

**23.** The mobile device according to Claim 22, comprising a shaft passing through a hinge shaft hole provided at the center of the hinge device and being fixed to the first casing so as not to be capable of rotating, a rotation control plate fixed to one end of the shaft so as not to be capable of rotating, and a guide hole provided on the slide rail for allowing the rotation control plate to engage therewith.

**24.** The mobile device according to Claim 23, wherein the rotation control plate is formed basically into a cylindrical shape and includes cut surfaces cut along two flat surfaces opposing to each other with the intermediary of a center axis, the guide hole includes a rotating member hole in which the rotation control plate is capable of rotating and a sliding member hole that allow the rotation control plate to slide in the horizontal direction so as not to be capable of rotating.

**25.** The mobile device according to any one of Claim 22 to Claim 24, wherein the slide plate is formed with a notch, and the slide rail includes a resilient member B that engages the notch.

**26.** The mobile device according to Claim 25, wherein a wiring groove is provided on a fitting surface of the first casing and the hinge body, and a flexible cable for electrically connecting the first casing and the second casing is arranged in the wiring groove.

**27.** The mobile device according to Claim 25 wherein a receiver and a speaker are provided on both sides of the second casing with the intermediary of the display arranged in the laterally elongated orientation.

**28.** The mobile device according to Claim 27, comprising detection means for detecting that the first casing and the second casing are opened into a T-shape, wherein the amount of amplification of voice signals inputted to the receiver is increased according to the information detected by the detecting means, so that the stereo-effect sound is generated in combination with the speaker.

## FIG. 1

## FIG. 2

(a)       (b)       (c)       (d)

## FIG. 3

(a)       (b)       (c)       (d)

# FIG. 4

## FIG. 5

## FIG. 6

# FIG. 7

# FIG. 8

FIG. 9

FIG. 10

# FIG. 11

# FIG. 12

# FIG. 13

EP 1 791 328 A1

## FIG. 14

(a)

(b)

# FIG. 15

(a)

(b)

(c)

EP 1 791 328 A1

# FIG. 16

(a)

(b)

(c)

FIG. 17

(a)                    (b)                    (c)

EP 1 791 328 A1

# FIG. 18

(a)

(b)

(c)

# FIG. 19

(a)

(b)

(c)

FIG. 20

FIG. 21

EP 1 791 328 A1

FIG. 22

# FIG. 23

209h

209f

209a

209j

209c

209k

209d

209i

209e

209b

209g

# FIG. 24

# FIG. 25

(a)

219b    219    219a    201

t    t

203

(b)

209

u    219c

EP 1 791 328 A1

# FIG. 26

(a)

(b)

(c)

# FIG. 27

(a)

201

207

207c

208

211b

211a

203

(b)

209a
209k
209j
209i
209d X
209a
209k

# FIG. 28

(a)

(b)

## FIG. 29

## INTERNATIONAL SEARCH REPORT

| International application No. |
| --- |
| PCT/JP2005/015263 |

**A. CLASSIFICATION OF SUBJECT MATTER**
*H04M1/02* (2006.01), *F16C11/04* (2006.01)

According to International Patent Classification (IPC) or to both national classification and IPC

**B. FIELDS SEARCHED**

Minimum documentation searched (classification system followed by classification symbols)
*H04M1/02* (2006.01), *F16C11/04* (2006.01)

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y<br>A | JP 2003-44199 A  (Casio Computer Co., Ltd.),<br>14 February, 2003 (14.02.03),<br>Par. Nos. [0008] to [0012], [0016] to [0019];<br>Fig. 2<br>(Family: none) | 1,9<br>10<br>2-8 |
| X<br>Y<br>A | JP 10-55227 A  (Sharp Corp.),<br>24 February, 1998 (24.02.98),<br>Par. Nos. [0043] to [0055]; Figs. 3, 12 to 18<br>(Family: none) | 1,9<br>22-25,27-28<br>2-8 |
| Y | JP 2004-132407 A  (Mitsubishi Electric Corp.),<br>30 April, 2004 (30.04.04),<br>Par. No. [0012]; Fig. 3<br>(Family: none) | 22 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>11 November, 2005 (11.11.05) | Date of mailing of the international search report<br>22 November, 2005 (22.11.05) |
| --- | --- |
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2005/015263 |

C (Continuation).  DOCUMENTS CONSIDERED TO BE RELEVANT

| Category* | Citation of document, with indication, where appropriate, of the relevant passages | Relevant to claim No. |
| --- | --- | --- |
| Y | JP 2002-304933 A  (Alps Electric Co., Ltd.),<br>18 October, 2002 (18.10.02),<br>Par. No. [0035]; Fig. 7<br>(Family: none) | 25 |
| Y | JP 2004-96573 A  (NEC Saitama, Ltd.),<br>25 March, 2004 (25.03.04),<br>Par. Nos. [0015] to [0018]; Fig. 2<br>(Family: none) | 27-28 |
| Y | JP 2002-118642 A  (NEC Saitama, Ltd.),<br>19 April, 2002 (19.04.02),<br>Par. Nos. [0006] to [0007], [0014] to [0015],<br>[0047] to [0048], [0051]<br>& US 2002/42287 A1      & GB 2373408 A | 28 |
| P,X | JP 2005-109971 A  (Sony Ericsson Mobile<br>Communications Kabushiki Kaisha),<br>21 April, 2005 (21.04.05),<br>Full text; Figs. 1 to 12<br>(Family: none) | 22-24 |
| A | JP 2003-338866 A  (Fujitsu Ltd.),<br>28 November, 2003 (28.11.03),<br>Par. Nos. [0010] to [0014]; Fig. 1<br>(Family: none) | 2-8,22 |

Form PCT/ISA/210 (continuation of second sheet) (April 2005)

## INTERNATIONAL SEARCH REPORT

| | International application No. |
| --- | --- |
| | PCT/JP2005/015263 |

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☒ Claims Nos.: 11-21, 26
   because they relate to parts of the international application that do not comply with the prescribed requirements to such an extent that no meaningful international search can be carried out, specifically:
   See extra sheet.

3. ☐ Claims Nos.:
   because they are dependent claims and are not drafted in accordance with the second and third sentences of Rule 6.4(a).

**Box No. III     Observations where unity of invention is lacking (Continuation of item 3 of first sheet)**

This International Searching Authority found multiple inventions in this international application, as follows:
    The inventions in Claims 1-10, 22-25, and 27-28 relate to the portable device having such a common matter that "the portable device comprises the hinge rotatably connecting the first casing to the second casing at the positions deviated from the one end side lateral centers thereof". The result of search reveals that the portable device having the common matter is not novel since it is disclosed in JP 2003-44199 A (Casio Computer Co., Ltd.), 14 February, 2003 (14.02.03), Par. Nos. [0008]-[0012], [0016]-[0019], Figs. 1-2.
    Since the common matter makes no contribution over the prior art, the common matter is not a special technical feature in the meaning of the second sentence of PCT Rule 13.2.                          (continued to extra sheet)

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
☐ The additional search fees were accompanied by the applicant's protest and, where applicable, the payment of a protest fee..

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2005)

| **INTERNATIONAL SEARCH REPORT** | International application No. |
|---|---|
| | PCT/JP2005/015263 |

<u>Continuation of Box No.II-2 of continuation of first sheet(2)</u>

In the inequality defining "the distance X" in Claims 11-14, W1 is used twice in ( ) in the form of 2W1 + W1. It is unclear which W1 is the error of W2 or whether or not W1 is dare used twice so that the meaning of the inequality can be understood easily.

Claims 15-19 and 21 describe "the shape for communication". Since such a description that the communication function is provided in the portable device is absent in both Claims 15-19 and 21 and Claim 9 quoted from Claims 15-19 and 21, it is unclear what shape is the "shape for communication".

Also, Claim 20 describes "the rotatingly sliding restriction part to restrict sliding". Since such a description that the upper and lower casings of the portable device are slid and the structure thereof required for sliding are not described in both Claim 20 and Claim 9 quoted from Claim 20, it is unclear how the slide operation restricted by the rotatingly sliding restriction part is performed.

Accordingly, the descriptions in Claims 11-21 lack the requirement of clarity in PCT Article 6 even if the common general technical knowledge in application is taken into account.

Since "the wiring groove" in Claim 26 is not described nor suggested in the specification, it lacks disclosure in the meaning of PCT Article 5, and Claim 26 is not sufficiently supported by the specification in the meaning of PCT Article 6.

<u>Continuation of Box No.III of continuation of first sheet(2)</u>

Accordingly, there is no common matter pertaining to all the inventions in Claims 1-10, 22-25, and 27-28.

The International Searching Authority considers that the number of the inventions of this international application is three as shown below.

The invention in Claim 1 relates to the portable device having the hinge rotatably connecting the first casing to the second casing at the positions deviated from the one end lateral centers thereof.

The inventions in Claims 2-8, 22-25, and 27-28 relate to the portable device so formed that, when the first and second casings are rotated in the first direction from the closed state of the second casing, the first and second casings are opened to be positioned on a straight line, and when they are rotated in the second direction, they are opened in a T-configuration.

The inventions in Claims 9-10 relate to the portable device having the engagement part for rotation passed through the upper and lower casings and rotatably engaging these casing with each other about its axis disposed at the position deviated from the lateral center of the lower casing.

Form PCT/ISA/210 (extra sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003338866 A
- JP 2003319043 A
- JP 3109089 B
- JP 2001156893 A

### Non-patent literature cited in the description

- *1. Website Copyright Owner: NTTDOCOMO 2. Website Name DOCOMONET 3. Related site in the Website ''Products'', ''SO506iC'' 4. Type of Medium {ON-LINE,* 02 March 2005, http://www.nttdocomo.co.jp/p_s/service/felica/f/so506ic.ht